# EUROPEAN PATENT APPLICATION

(11) **EP 4 474 112 A1**
(43) Date of publication of application: **11.12.2024**
(21) Application number: 23766750.6
(22) Date of filing: 03.03.2023
(51) Int. Cl.: B25J 9/22, G05B 19/414

(54) **CONTROL SYSTEM, COMPUTATION MODULE, ROBOT CONTROLLER, AND CONTROL METHOD**

(30) Priority: 08.03.2022 JP 2022035101
(71) Applicant: Kabushiki Kaisha Yaskawa Denki, Kitakyushu-shi, Fukuoka 806-0004 (JP)
(72) Inventor: ARITA, Yuta, Kitakyushu-shi, Fukuoka 806-0004 (JP); MAEDA, Takahiro, Kitakyushu-shi, Fukuoka 806-0004 (JP); KUMAGAI, Hiroshi, Kitakyushu-shi, Fukuoka 806-0004 (JP)
(74) Representative: Grünecker Patent- und Rechtsanwälte PartG mbB
(86) International application number: PCT/JP2023/008123
(87) International publication number: WO 2023/171574

(57) **Abstract**

A control system 3 includes: a robot controller 100 configured to control a robot 2; and a computation module 200 configured to communicate with the robot controller 100, wherein the robot controller 100 includes a first memory 110 in which state information of the robot 2 is stored, and wherein the computation module 200 includes: a second memory 210 whose content is synchronized with a content of the first memory 110; and a processor 201 capable of executing an application 241 that performs a computation related to the control of the robot 2 based on the content of the second memory 210.

## Description

### Technical Field

The present disclosure relates to a control system, a computation module, a robot controller, and a control method.

### Background Art

Patent Document 1 discloses a motion control device in which a non-real-time OS and a real-time OS are installed and which performs motion control of a control target device. The motion control device includes a shared memory which can be commonly referred to and written to by each functional unit on the non-real-time OS side and each functional unit on the real-time OS side.

### Citation List

### Patent Literature

[Patent Document 1] Japanese Unexamined Patent Publication No. 2019-220135

### Summary of Invention

### Technical Problem

The present disclosure provides a system in which functions of a robot controller can be easily expanded.

### Solution to Problem

A control system according to an aspect of the present disclosure includes: a robot controller configured to control a robot; and a computation module configured to communicate with the robot controller, wherein the robot controller includes a first memory in which state information of the robot is stored, and the computation module includes: a second memory whose content is synchronized with the first memory; and a processor capable of executing an application that performs a computation related to control of the robot based on the content of the second memory.

A computation module according to another aspect of the present disclosure includes: a shared memory configured to store information referred to by a robot controller that controls a robot; a processor capable of executing an application that performs a computation related to control of the robot based on a content of the shared memory; and a memory manager configured to execute at least one of writing and reading of data to and from the shared memory based on a request from the application.

A computation module according to still another aspect of the present disclosure includes: a shared memory configured to store information written by a robot controller configured to control a robot; an application storage unit configured to store one or more applications that perform a computation based on a content of a memory; and a memory manager configured to notify a content of the shared memory associated with an application stored in the application storage unit to the associated application.

A robot controller according to still another aspect of the present disclosure includes: a shared memory configured to store information written by a computation module capable of executing an application that performs a computation related to control of a robot based on state information of the robot; a state collection unit configured to write at least the state information in the shared memory; a memory interpreter configured to generate a control command executable inside the robot controller based on data written in the shared memory based on a computation result by the application; and a motion control unit configured to control a motion of the robot based on the control command.

A control system according to still another aspect of the present disclosure includes: a processor capable of executing an application that performs a computation related to control of a robot; a memory manager configured to execute at least one of writing and reading of data to and from a shared memory based on a request from an application; a command storage unit capable of storing a plurality of local commands; a local interpreter configured to sequentially read the plurality of local commands from the command storage unit and to generate a control command; a memory interpreter configured to generate a control command based on data read from the shared memory; and a motion control unit configured to control motion of the robot based on the control command generated by at least one of the memory interpreter and the local interpreter.

A control system according to still another aspect of the present disclosure includes: a command storage unit capable of storing a plurality of local commands for controlling a robot; a computation module configured to generate data used in control based on a local command and to write generated data in a shared memory; and a motion control unit configured to control a motion of the robot based on the generated data read from the shared memory and the local command read from the command storage unit.

A control method according to still another aspect of the present disclosure includes: storing, by a robot controller configured to control a robot, state information of the robot in a first memory; synchronizing, by a computation module configured to communicate with the robot controller, a content of a second memory to the content of the first memory; and executing, by the computation module, an application that performs a computation related to control of the robot based on the content of the second memory.

### Advantageous Effects of Invention

According to the present disclosure, it is possible to provide a system in which functions of a robot controller can be easily expanded.

### Brief Description of Drawings

FIG. 1 is a schematic diagram illustrating an example configuration of a robot system.
FIG. 2 is a block diagram illustrating an example functional configuration of a computation module.
FIG. 3 is a block diagram illustrating an example functional configuration of a robot controller.
FIG. 4 is a block diagram illustrating an example hardware configuration of a control system.
FIG. 5 is a flowchart illustrating an example memory synchronization procedure in the robot controller.
FIG. 6 is a flowchart illustrating an example memory synchronization procedure in the computation module.
FIG. 7 is a flowchart illustrating an example data writing procedure executed by the memory manager.
FIG. 8 is a flowchart illustrating an example data reading procedure executed by a memory manager.
FIG. 9 is a flowchart illustrating an example procedure in which an application generates an operation path in response to a call from the robot controller.
FIG. 10 is a flowchart illustrating an example procedure for reading a plurality of local commands including a call of an application that generates a path.
FIG. 11 is a flowchart illustrating an example procedure for reading command data generated by an application.
FIG. 12 is a flowchart illustrating an example execution procedure of control based on a control command.
FIG. 13 is a flowchart illustrating an example command selection procedure.
FIG. 14 is a flowchart illustrating an example procedure in which an application performs a correction computation in response to a call from the robot controller.
FIG. 15 is a flowchart illustrating an example procedure for reading a plurality of local commands including a call of an application that performs a correction computation.
FIG. 16 is a flowchart illustrating an example procedure for reading correction data generated by an application.
FIG. 17 is a flowchart illustrating an example execution procedure of control based on a control command and correction data.

### Description of Embodiments

Hereinafter, embodiments will be described in detail with reference to the drawings. In the description, the same elements or elements having the same functions are denoted by the same symbols, and redundant description will be omitted.

### Robot System

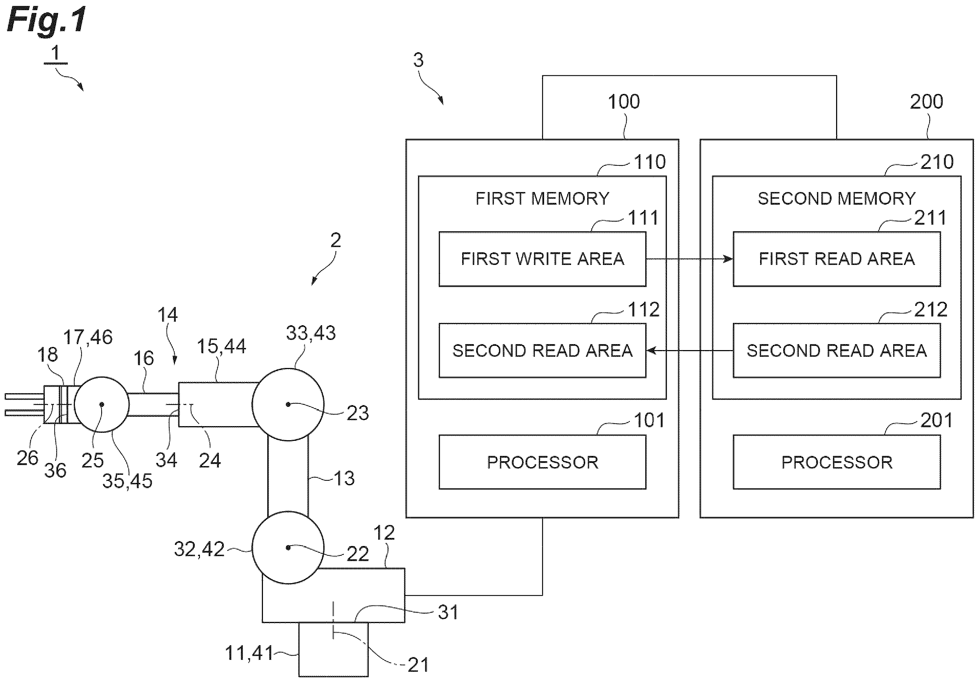

A robot system 1 illustrated in FIG. 1 is a system that causes a robot 2 to execute various operations such as production of a workpiece. The robot system 1 may be a system that causes the robot 2 to perform work in a field other than the industrial field, such as the biomedical field. As illustrated in FIG. 1, the robot system 1 includes the robot 2 and a control system 3.

The robot 2 is a six-axis vertical articulated robot and includes a base 11, a pivoting portion 12, a first arm 13, a second arm 14, a third arm 17, a tip portion 18, and actuators 41, 42, 43, 44, 45, 46. The base 11 is installed on a floor surface, a wall surface, a roof surface, an automated guided vehicle, or the like. The pivoting portion 12 is mounted on the base 11 so as to rotate about a vertical axis 21. The first arm 13 is connected to the pivoting portion 12 so as to swing about an axis 22 that intersects (for example, is orthogonal to) the axis 21 and extends away from the axis 22. The intersection includes a case of being skew such as so-called three-dimensional intersection. The same applies to the following.

The second arm 14 is connected to a tip portion of the first arm 13 so as to swing about an axis 23 substantially parallel to the axis 22 and extends away from the axis 23. The second arm 14 includes an arm base 15 and an arm end 16. The arm base 15 is connected to the tip portion of the first arm 13. The arm end 16 is connected to the arm base 15 tip portion so as to rotate about an axis 24 that intersects (for example, is orthogonal to) the axis 23 and extends along the axis 24 in a direction away from the arm base 15.

The third arm 17 is connected to a tip portion of the arm end 16 so as to swing about an axis 25 that intersects (for example, is orthogonal to) the axis 24. The tip portion 18 is connected to a tip portion of the third arm 17 so as to rotate about an axis 26 that intersects (for example, is orthogonal to) the axis 25.

Thus, the robot 2 includes a joint 31 connecting the base 11 and the pivoting portion 12, a joint 32 connecting the pivoting portion 12 and the first arm 13, a joint 33 connecting the first arm 13 and the second arm 14, a joint 34 connecting the arm base 15 and the arm end 16 in the second arm 14, a joint 35 connecting the arm end 16 and the third arm 17, and a joint 36 connecting the third arm 17 and the tip portion 18.

The actuators 41, 42, 43, 44, 45, 46 include, for example, electric motors and reduction gears and drive each of the joints 31, 32, 33, 34, 35, 36. For example, the actuator 41 rotates the pivoting portion 12 about the axis 21, the actuator 42 swings the first arm 13 about the axis 22, the actuator 43 swings the second arm 14 about the axis 23, the actuator 44 rotates the arm end 16 about the axis 24, the actuator 45 swings the third arm 17 about the axis 25, and the actuator 46 swings the tip portion 18 about the axis 26.

The specific configuration of the robot 2 can be modified as appropriate. For example, the robot 2 may be a seven-axis redundant robot in which one joint is further added to the six-axis vertical articulated robot, or may be a so-called SCARA-type multijoint robot.

The control system 3 controls the robot 2. Hereinafter, an example configuration of the control system 3 will be described in detail.

### Control System

The control system 3 includes a robot controller 100 for controlling the robot 2. For example, the robot controller 100 generates driving power for controlling the robot 2 and supplies the driving power to the actuators 41, 42, 43, 44, 45, 46. As an example of the control of the robot 2, the robot 2 is operated based on a predetermined operation program.

The operation program includes a plurality of time-series operation commands. Each of the plurality of operation commands defines at least a target position of the tip portion 18 and a target speed of the tip portion 18 to the target position. The target position is information that defines coordinates of the tip portion 18 in a robot coordinate system and the posture of the tip portion 18 around each of coordinate axes. The robot coordinate system is a three-dimensional coordinate system fixed to the base 11. The target position may be information that directly determines the coordinates and posture of the tip portion 18, or may be information that indirectly determines the coordinates and posture of the tip portion 18. Specific examples of the information for indirectly determining the coordinates and the posture of the tip portion 18 include rotation angles of the joints 31, 32, 33, 34, 35, 36.

If a more advanced control computation such as automatic generation of a plurality of operation commands for causing the robot 2 to perform an operation adapted to the surrounding environment (for example, an operation of avoiding a collision with a surrounding object) can be performed during the operation of the robot 2, the usability of the robot controller 100 is significantly improved. However, since real-time performance is required for the control of the robot 2, it is difficult to spare the resources of the robot controller 100 for the control computation.

Correspondingly, the control system 3 further includes a computation module 200 configured to communicate with the robot controller 100. The robot controller 100 includes a first memory 110 in which state information of the robot 2 is stored, and the computation module 200 includes a second memory 210 whose content is synchronized with a content of the first memory 110, and a processor 201 capable of executing an application 241 that performs a computation related to control of the robot 2 based on the content of the second memory 210.

Since the first memory 110 and the second memory 210 are synchronized, it is possible to create the application 241 related to the control of the robot 2 by setting a target of data writing or reading to the second memory 210. Accordingly, it is possible to easily construct the application 241 without considering special rules such as a protocol of data exchange between the robot controller 100 and the computation module 200. With the constructed application 241, it is possible to assist or lead the control of the robot 2 by the robot controller 100. Accordingly, functions of the robot controller 100 can be easily expanded.

The robot controller 100 and the computation module 200 may be provided in separate housings or may be provided in the same housing. Examples of the communication between the robot controller 100 and the computation module 200 include serial communication, parallel communication, and bus communication.

The communication between the robot controller 100 and the computation module 200 may be network communication. The network communication is communication performed in accordance with a communication protocol in a network-like communication line. A communication protocol in a network-like communication line includes specifying a network address of a partner for each data transmission.

The network communication may be industrial network communication that ensures time synchronization, or may be general-purpose local area network (LAN) communication or wide area network communication. The robot controller 100 and the computation module 200 may be configured to perform wireless communication such as wireless local area network (LAN) or mobile communication (for example, 5G communication).

The first memory 110 is configured by one or more memory devices 192, one or more storage devices 193, or the like to be described later in the hardware configuration. The second memory 210 is configured by one or more memory devices 292, one or more storage devices 293, or the like described below. The first memory 110 may include a first write area 111 for writing data and a second read area 112 for reading data. The second memory 210 may include a first read area 211 for reading data and a second write area 212 for writing data.

The content of the first read area 211 is synchronized with the content of the first write area 111. Therefore, it is possible to read the content written in the first write area 111 in the robot controller 100 from the first read area 211 in the computation module 200. The content of the second read area 112 is synchronized with the content of the first read area 211. Therefore, it is possible to read the content written in the second write area 212 in the computation module 200 from the second read area 112 in the robot controller 100.

The processor 201 is configured by one or more processing devices 291 or the like described later. The application 241 is a program constructed in advance so as to perform a computation related to the control of the robot 2. Examples of the computation related to the control include a calculation for generating control data based on the state information of the robot 2. Examples of the state information of the robot 2 include the position of the tip portion 18, the posture of the tip portion 18, the moving speed of the tip portion 18, the rotation angle of the actuators 41, 42, 43, 44, 45, 46, the rotation speed of the actuators 41, 42, 43, 44, 45, 46, and the torque generated by the actuators 41, 42, 43, 44, 45, 46. The control data may be, for example, text data representing the above-described operation command, or may be numerical data such as the target position and the target speed constituting the operation command.

As an example, when executing the application 241 that generates control data to operate the robot 2, the processor 201 may write the control data in the second write area 212. Thus, in the robot controller 100, the control data can be read from the second read area 112, and the robot 2 can be operated based on the read control data.

The computation related to the control of the robot 2 is not necessarily limited to the computation for generating the data for operating the robot 2. A computation for evaluating the operation of the robot 2 based on the state information of the robot 2 is also included in the computation related to the control of the robot 2.

In order to be able to operate the robot 2 based on the control data, the robot controller 100 may further include a processor 101. The processor 101 is configured by one or more processing devices 191 or the like described later. The processor 101 performs, in the robot controller 100, a computation that leads the control of the robot 2 based on the control data. For example, the processor 101 calculates a target rotation angle of the joints 31, 32, 33, 34, 35, 36 so as to cause the robot 2 to execute an operation based on the control data, and causes each of the actuators 41, 42, 43, 44, 45, 46 to output driving power for causing the rotation angle of the joints 31, 32, 33, 34, 35, 36 to follow the target rotation angle.

The processor 101 may be further configured to acquire and write state information of the robot 2 in the first write area 111. Accordingly, in the computation module 200, the state information of the robot 2 can be read from the first read area 211, and the read state information of the robot 2 can be used for computation or the like by the application 241.

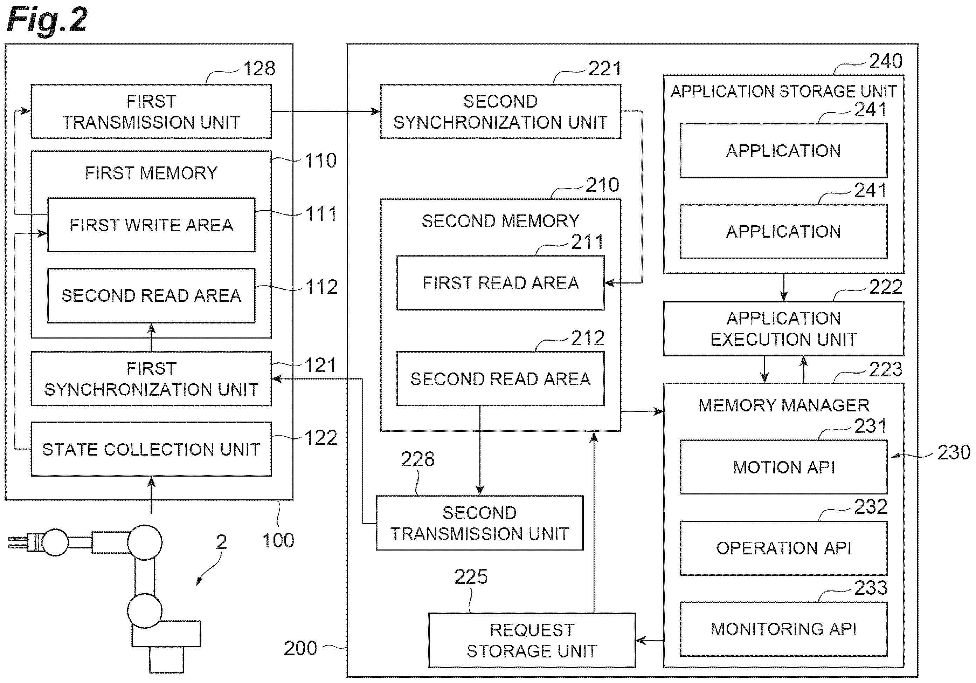

FIG. 2 is a block diagram illustrating an example functional configuration of the robot controller 100 and the computation module 200. As illustrated in FIG. 2, the robot controller 100 includes a first synchronization unit 121 and a first transmission unit 128 as functional constituent elements (hereinafter referred to as "functional blocks"). The computation module 200 includes a second synchronization unit 221, a second transmission unit 228, an application storage unit 240, an application execution unit 222, and a memory manager 223 as functional blocks. The first synchronization unit 121 periodically synchronizes (for example, matches) the content of the first memory 110 with the content of the second memory 210 by network communication. The second synchronization unit 221 periodically synchronizes (for example, matches) the content of the second memory 210 with the content of the first memory 110 by network communication.

For example, the first transmission unit 128 periodically transmits the content of the first write area 111 to the computation module 200 via network communication. The second synchronization unit 221 periodically receives the content of the first write area 111 from the first transmission unit 128 and synchronizes the content of the first read area 211 with the received content. The second transmission unit 228 periodically transmits the content of the second write area 212 to the robot controller 100 via network communication. The first synchronization unit 121 periodically receives the content of the second write area 212 from the second transmission unit 228 and synchronizes the content of the second read area 112 with the received content. Note that, even in a case where the synchronization periods of the first memory 110 and the second memory 210 vary to some extent due to jitters in communication or the like, the synchronization is included in the periodic synchronization as long as the fixed-period property is substantially maintained.

The first memory 110 and the second memory 210 are updated periodically with each other by network communication. Therefore, the application 241 can be easily constructed without being conscious of the protocol of the network communication or the like.

The application storage unit 240 stores one or more applications 241. The memory manager 223 executes at least one of writing and reading of data to and from the second memory 210 based on a request from the application 241. For example, the memory manager 223 includes an API 230, and writes or reads data to or from the second memory 210 based on a request received via the API 230.

The API 230 (Application Programming Interface) is an interface that enables software provided in advance to be used from an external application, receives a request in a predetermined format, and passes a response to the request to the application that has made the request.

By requesting the writing or reading of the data to or from the second memory 210 via the API 230 of a predetermined format, the reading or writing of the data can be easily performed without understanding the configuration or the like of the second memory 210. Further, by wrapping the second memory 210 with the API 230 and restricting direct access to the second memory 210, unauthorized writing of the data or the like is prevented.

For example, the API 230 includes a motion API 231 corresponding to the control of the robot 2. Corresponding to the control of the robot 2 means, for example, handling the data used for the control of the robot 2. For example, the motion API 231 receives a request for writing the above-described control data in the second write area 212 from the application 241, and passes, to the application 241, a response indicating that the control data has been read from the second read area 112, a result of execution of control based on the control data, or the like.

The motion API 231 may receive, from the application 241, a request to write a control variable used to control the robot 2 in the second write area 212, and may pass, to the application 241, a response indicating that the control variable has been read from the second read area 112, a result of execution of control based on the control variable, or the like.

The motion API 231 may receive, from the application 241, a request for writing an execution command of the operation program stored in the robot controller 100 in the second write area 212, and may pass, to the application 241, a response indicating that the execution command has been read from the second read area 112, an execution result of the operation program based on the execution command, or the like.

The operation program in the robot controller 100 may be subdivided into a plurality of job programs in units of work contents, in units of workpieces, or the like. In this case, the motion API 231 may receive a request to write an execution command for each job program in the second write area 212.

When receiving a request from the application 241 via the motion API 231, the memory manager 223 writes data corresponding to the request in the second memory 210. For example, the memory manager 223 writes control data and the like in the second write area 212. As will be described later, in the robot controller 100, control data or the like is read from the second read area 112, and a response corresponding to the control data or the like is written in the first write area 111. The memory manager 223 reads a response corresponding to the control data or the like from the first read area 211, and passes the response to the application 241 that has made the request to write the control data or the like.

In this way, the function expanded by the application 241 can be easily reflected in the control of the robot 2 by the motion API 231. In addition, since the second memory 210 is wrapped by the motion API 231, it is possible to improve security against erroneous operation, secret leakage, and the like.

The API 230 may include an operation API 232, a monitoring API 233, and the like in addition to the motion API 231. The operation API 232 corresponds to the operation of the robot controller 100. Corresponding to the operation of the robot controller 100 means, for example, handling the data used for the operation of the robot controller 100. For example, the operation API 232 receives a request for writing a servo-on command in the second write area 212 from the application 241, and passes, to the application 241, a response indicating that the servo-on command has been read from the second read area 112, that servo-on has been completed, or the like. The servo-on command is a command to start supply of drive power (including power for stopping) to the actuators 41, 42, 43, 44, 45, 46.

The operation API 232 may receive, from the application 241, a request to write an alarm reset instruction in the second write area 212, and pass, to the application 241, a response indicating that the alarm reset instruction has been read from the second read area 112, that the alarm has been reset, or the like.

When receiving a request from the application 241 via the operation API 232, the memory manager 223 writes the data corresponding to the request in the second memory 210. For example, the memory manager 223 writes a servo-on command or the like in the second write area 212. In the robot controller 100, the servo-on command or the like is read from the second read area 112, and a response corresponding to the servo-on command or the like is written in the first write area 111. The memory manager 223 reads a response corresponding to the servo-on command or the like from the first read area 211, and passes the response to the application 241 that has made the request for writing the servo-on command or the like.

The monitoring API 233 corresponds to content monitoring of the first read area 211. For example, the monitoring API 233 receives a read request for data, reads data corresponding to the request from the first read area 211, and passes a response including the read data to the application 241.

When the memory manager 223 receives the request from the application 241 through the monitoring API 233, the memory manager 223 reads the data corresponding to the request from the first read area 211, and passes a response including the read data to the application 241.

The memory manager 223 may notify the content of the second memory 210 associated with the application 241 stored in the application storage unit 240 to the associated application 241. For example, when reading the data associated with the application 241 from the second memory 210, the memory manager 223 may pass a response including the read data to the associated application 241. Specific examples of the data associated with the application 241 include call data indicating whether processing should be started to the application 241.

When reading an activation command associated with the application 241 from the second memory 210, the memory manager 223 may activate the associated application 241. Activating the associated application 241 is also included in notifying the associated application 241. As an example, when receiving a request from the application 241 via the monitoring API 233, the memory manager 223 starts monitoring an area where the activation command is stored in the second memory 210, and passes a response indicating the start of monitoring to the application 241. In response to this, the application 241 stops. Thereafter, when reading the activation command from the second memory 210, the memory manager 223 activates the application 241 associated with the activation command.

In this way, notification can be made from the robot controller 100 to the application 241 via the first memory 110 and the second memory 210. Thus, it is possible to easily construct the application 241 that operates based on the notification from the robot controller 100.

The robot controller 100 may further include a state collection unit 122. The state collection unit 122 writes at least state information of the robot 2 in the first memory 110. For example, the state collection unit 122 writes the state information of the robot 2 in the first write area 111. In response to the request from the application 241, the memory manager 223 acquires state information from the second memory 210 and passes it to the application 241. For example, when receiving a request from the application 241 via the monitoring API 233, the memory manager 223 reads state information of the robot 2 from the first read area 211, and passes a response including the read state information to the application 241.

The state information of the robot 2 needed to construct the application 241 is continuously updated in the second memory 210. Accordingly, it is possible to easily construct the application 241 based on the state information of the robot 2 only by incorporating the reading of the state information from the second memory 210 into the application 241.

The state collection unit 122 may write the state information in the first write area 111 of the first memory 110 and the memory manager 223 may acquire the state information from the first read area 211 of the second memory 210 corresponding to the first write area 111 and pass the state information to the application 241, and may write the data based on the request from the application 241 in the second write area 212 different from the first read area 211 in the second memory 210. Since the writing of the data from the application 241 is performed in the second write area 212 different from the first read area 211 for acquiring the state information, the state information stored by the first read area 211 can always be synchronized with the state information written by the state collection unit 122. Thus, the state information can be provided to the application 241 at any timing.

The memory manager 223 may queue a plurality of requests from one or more applications 241 in a request storage unit 225, dequeue the plurality of requests in order from the request storage unit 225, and write data corresponding to the dequeued request to the second memory 210. The "queuing" means that a plurality of requests are stored in the request storage unit 225 in the order of reception. The memory manager 223 dequeues a plurality of requests from the request storage unit 225 in the order of reception.

Since the queuing of the request is performed by the memory manager 223, it is possible to construct the application 241 so as to perform the request at any time without considering the risk of erroneously overwriting a preceding request. Even in a case where two or more applications 241 can be executed at the same time, it is possible to construct each application 241 so as to make a request at any time without considering a request situation by other applications 241. Accordingly, the construction cost of the application 241 can be further reduced.

When reading the response from the second memory 210, the memory manager 223 may dequeue a request subsequent to the request corresponding to the response from the request storage unit 225. Both the flexibility of the application 241 and the real-time performance in the robot controller 100 can be achieved.

In a case where the request is a request for reading the state information of the robot 2, the memory manager 223 may read the state information from the second memory 210 without queuing the request, and pass the state information to the application 241 that has made the request. It is possible to prevent the acquisition delay of the state information by excluding the request for reading the state information for which immediacy is required from the target of the queuing.

### Robot Controller

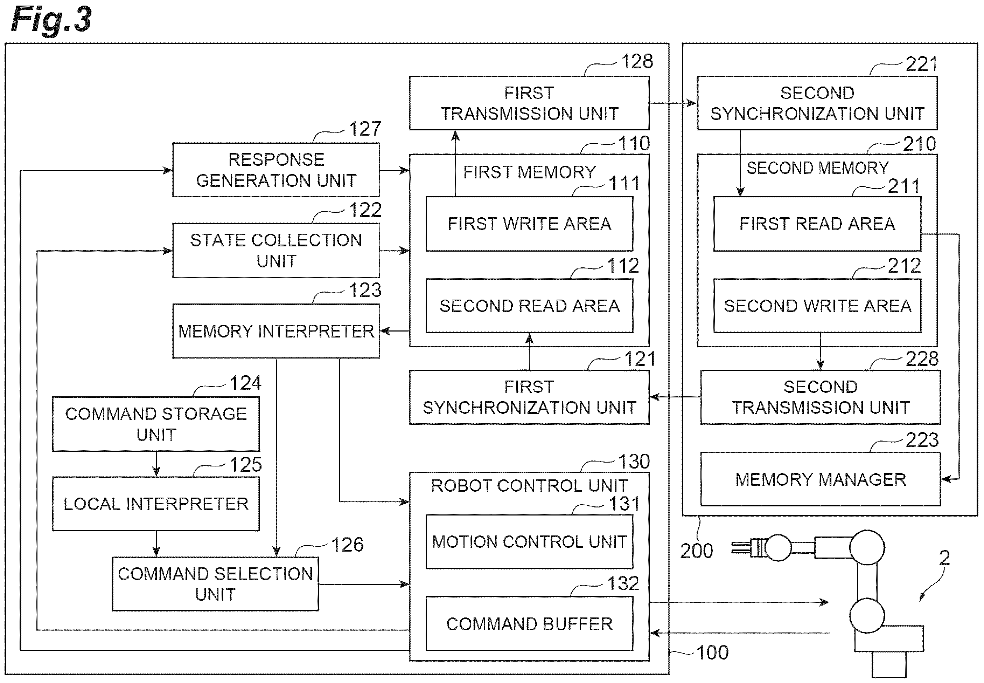

As illustrated in FIG. 3, the robot controller 100 further includes a memory interpreter 123 and a robot control unit 130. The memory interpreter 123 generates a control command executable inside the robot controller 100 based on the control data read from the first memory 110. The robot control unit 130 executes a processing corresponding to the control command. With the memory interpreter 123, functions of the robot controller 100 for controlling the robot 2 by a control command can be easily expanded by a computation result in the computation module 200.

The control command may be a command of any content as long as it is executable inside the robot controller 100. The command being executable inside the robot controller 100 means that the robot controller 100 can interpret the content of the command and execute a process corresponding to the command. For example, the control command may be text data representing the above-described operation command, or may be numerical data obtained by interpreting the above-described operation command.

Examples of the text representing an operation command are shown below.

### Example 1) MoveL (...)

### Example 2) MoveS (...)

### Example 3) MoveJ (...)

In each example, arguments in parentheses represent a target position and a target speed. "Move" represents moving to a target position at a target speed. The alphabet added after "Move" represents an interpolation method from the movement start position to the target position. For example, "L" represents linear interpolation, and "S" represents sigmoid interpolation. "J" represents linear interpolation between the angles of the joints 31, 32, 33, 34, 35, 36 before the start of movement and the angles of the joints 31, 32, 33, 34, 35, 36 at the target position. The arguments in MoveJ may be the respective target rotation angle and target rotation speed of the joints 31, 32, 33, 34, 35, 36.

When the memory interpreter 123 generates a control command corresponding to the operation command, the robot control unit 130 controls the motion of the robot 2 based on the control command. For example, the robot control unit 130 includes a motion control unit 131 and a command buffer 132. The command buffer 132 temporarily stores the control commands generated by the memory interpreter 123 in time series. The motion control unit 131 controls the motion of the robot 2 based on one or more control commands stored in the memory interpreter 123. For example, the motion control unit 131 repeats control processing based on one or more control commands at a certain control cycle.

The control processing includes calculating target rotation angles of the joints 31, 32, 33, 34, 35, 36 so as to move the tip portion 18 at a target speed along an operation path represented by one or more control commands, and causing the rotation angles of the joints 31, 32, 33, 34, 35, 36 to follow the target rotation angles.

The robot controller 100 may be configured to be able to execute the control of the robot 2 based on an operation program generated in the robot controller 100 in advance, separately from the control of the robot 2 based on the control command generated by the memory interpreter 123.

For example, the robot controller 100 may further include a command storage unit 124 and a local interpreter 125. The command storage unit 124 stores a pre-generated operating program. As described above, the operation program includes a plurality of operation commands. Hereinafter, the operation command of the operation program stored in the command storage unit 124 is referred to as a "local command".

The local interpreter 125 sequentially reads a plurality of local commands from the command storage unit 124 and generates control commands. The command buffer 132 temporarily stores the control commands generated by at least one of the memory interpreter 123 and the local interpreter 125 in time series. The motion control unit 131 controls the motion of the robot 2 based on the control commands generated by at least one of the memory interpreter 123 and the local interpreter 125.

With this configuration, it is possible to operate the robot 2 based on the plurality of local commands and to operate the robot 2 based on the computation result of the computation module 200. Accordingly, the robot controller 100 can have a local control mode in which the motion control unit 131 controls the motion of the robot 2 based on the control command generated by the local interpreter 125, and an application control mode in which the motion control unit 131 controls the motion of the robot 2 based on the control command generated by the memory interpreter 123 based on the computation result of the application 241. Furthermore, it is also possible to operate the robot 2 based on a combination of a plurality of local commands and the computation result of the computation module 200. Therefore, the capability of controlling the robot 2 based on the local command can be easily expanded by the computation result of the computation module 200.

In addition, both the local command and the computation result of the computation module 200 are converted into control commands of the same format. Accordingly, by operating the robot 2 based on a plurality of local commands and operating the robot 2 based on the computation result of the computation module 200, the motion control unit 131 and the command buffer 132 can be used jointly. Therefore, the configuration of the robot controller 100 can be simplified.

The control command may be a command indicating substituting a value into the above-described control variable. In this case, the robot control unit 130 substitutes the value into the control variable based on the control command. The control command may be a command representing an execution instruction of an operation program or a job program stored in the command storage unit 124. In this case, the robot control unit 130 causes the local interpreter 125 to generate a control command based on the operation program or the job program corresponding to the execution command.

There is a case in which the robot controller 100 dynamically generates or modifies at least a part of an operation path (for example, at least a part of the operation program) based on the surrounding environment information or the like. Such a function is referred to as a "local generation function". The control command may be a command for calling a local generation function. In this case, the robot control unit 130 calls the local generation function of the robot controller 100 based on the control command.

The program generated by the local generation function is read by, for example, the local interpreter 125 and executed by the motion control unit 131. There is a case in which the local generation function is called in an operation program stored in the command storage unit 124. Also in this case, the program generated by the local generation function is read by the local interpreter 125 and executed by the motion control unit 131.

The control command may be a command representing the servo-on command described above. In this case, the robot control unit 130 starts supply of driving power to the actuators 41, 42, 43, 44, 45, 46 based on the control command. The control command may be a command representing the above-described alarm reset instruction. In this case, the robot control unit 130 resets the alarm generated in the robot controller 100.

The robot controller 100 may further include a command selection unit 126. The command selection unit 126 prohibits input of a control command from the memory interpreter 123 to the motion control unit 131 during a period in which the robot 2 operates based on a control command generated by the local interpreter 125, and prohibits input of a control command from the local interpreter 125 to the motion control unit 131 during a period in which the robot 2 operates based on a control command generated by the memory interpreter 123.

The local control mode and the application control mode described above can be implemented by coding both the operation program stored in the command storage unit 124 and the application 241. In the operation program, the local control mode and the application control mode are realized by the operation program successively including the local command for calling the application 241 and the local command for waiting for the completion of the execution of the application 241 in this order. For example, the local control mode shifts to the application control mode in the middle, and the local control mode is resumed after the completion of the application control mode. The local control mode and the application control mode are also realized by the application 241 successively including the request for writing the execution command in the second write area 212 and the waiting for the completion notification of the operation program corresponding to the execution command in this order. For example, the application control mode shifts to the local control mode in the middle, and the application control mode is resumed after the completion of the local control mode.

However, due to a coding error or the like, the control command generated by the memory interpreter 123 and the control command generated by the local interpreter 125 may be mixed unexpectedly, and a malfunction of the robot 2 may occur. According to the command selection unit 126, it is possible to prevent the control command from the local interpreter 125 and the control command from the memory interpreter 123 from being mixed unexpectedly, and to prevent a malfunction of the robot 2 from occurring.

The application 241 may generate data used for control based on the local command and request the memory manager 223 to write the generated data, and the motion control unit 131 may control the motion of the robot 2 based on the generated data read from the first memory 110 and the local command read from the command storage unit 124. Resources of the robot controller 100 and resources of the computation module 200 can be combined to provide more advanced control.

For example, the application 241 may generate correction data for the operation of the robot 2 based on the environmental information acquired by the camera or the like. In this case, the memory interpreter 123 generates a correction command based on the correction data as an example of the control command. The correction command indicates, for example, substituting the correction data into a correction variable indicating a correction amount for the control command based on the local command. The robot control unit 130 substitutes the correction data into the correction variable based on the correction command. The motion control unit 131 controls the motion of the robot 2 based on the control command generated by the local interpreter 125 and the correction variable. The memory interpreter 123 may generate the control command in which the correction variable is considered based on the local command and the correction variable.

The robot controller 100 may further include a response generation unit 127. The response generation unit 127 generates a response corresponding to data read by the memory interpreter 123, and writes the response in the first memory 110. The memory manager 223 reads the response from the second memory 210 and passes the response to the application 241 that has made the request to write the read data. Based on the response, it is possible to easily generate the application 241 for advancing the computation in accordance with the execution status of the process based on the request.

### Hardware Configuration

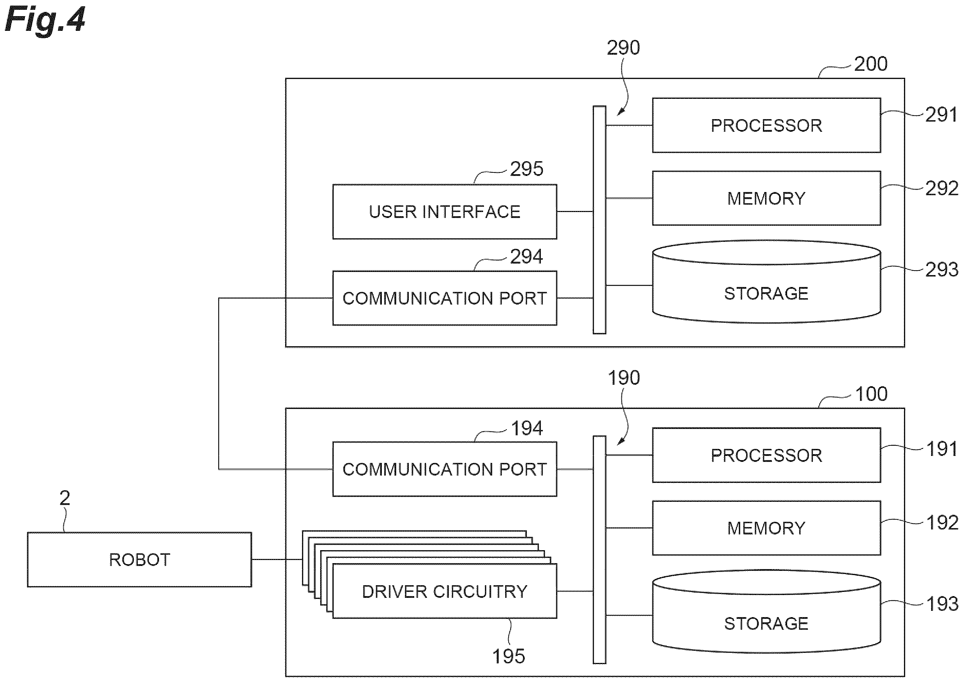

FIG. 4 is a block diagram illustrating an example hardware configuration of the control system 3. As illustrated in FIG. 4, the robot controller 100 includes circuitry 190. The circuitry 190 includes one or more processing devices 191, one or more memory device 192, one or more storage devices 193, a communication port 194, and driver circuitry 195. The one or more storage devices 193 are non-volatile storage media and store a program for configuring the above-described processor 101 and the first memory 110 in the robot controller 100. The one or more storage devices 193 may store a program for further configuring the above-described functional blocks in the robot controller 100. Each of the one or more storage devices 193 may be a built-in storage media such as a flash memory or a hard disk, or may be a portable storage media such as a USB flash drive or an optical disc.

The one or more memory devices 192 temporarily store a program loaded from the one or more storage devices 193. Each of the one or more memory devices 192 may be a random-access memory or the like. One or more processing devices 191 may function as the processor 101 by executing a program loaded on one or more memory devices 192 to configure the first memory 110 in one or more memory devices 192 or one or more storage devices 193. One or more processing devices 191 may further configure each functional block described above. The one or more processing devices 191 may store the computation result in one or more memory devices 192 as appropriate.

The communication port 194 communicates with the computation module 200 based on a request from one or more processing devices 191. The driver circuitry 195 supplies driving power to the robot 2 (the actuators 41, 42, 43, 44, 45, 46) based on a request from one or more processing devices 191.

The computation module 200 includes circuitry 290. The circuitry 290 includes one or more processing devices 291, one or more memory devices 292, one or more storage devices 293, a communication port 294, and a user interface 295. The one or more storage devices 293 are non-volatile storage media and store a program for configuring the above-described processor 201 and the second memory 210 in the computation module 200. The one or more storage devices 293 may store a program for further configuring the above-described functional blocks in the computation module 200. Each of the one or more storage devices 293 may be a built-in storage media such as a flash memory or a hard disk, or may be a portable storage media such as a USB flash drive or an optical disc.

The one or more memory devices 292 temporarily store a program loaded from the one or more storage devices 293. The one or more memory devices 292 may be a random-access memory or the like. One or more processing devices 291 may function as the processor 201 by executing a program loaded on one or more memory devices 292 to configure the second memory 210 in one or more memory devices 292 or one or more storage devices 293. One or more processing devices 291 may further configure each functional block described above. The one or more processing devices 291 may store the computation result in one or more memory devices 292 as appropriate.

The communication port 294 communicates with the robot controller 100 based on a request from one or more processing devices 291. The user interface 295 communicates with the user based on a request from one or more processing devices 291. For example, the user interface 295 includes a display device and input devices. Examples of the display device include a liquid crystal monitor and an organic electro-luminescence (EL) monitor. Examples of the input device include a keyboard, a mouse, or a keypad. The input device may be integrated with the display device as a touch panel.

The above-described hardware configuration is merely an example, and can be appropriately modified.

### Control Procedure

As an example of the control method, an example control procedure executed by the control system 3 is described. This procedure includes: storing, by the robot controller 100, the state information of the robot 2 in the first memory 110; synchronizing, by the computation module 200, the content of the second memory 210 with the content of the first memory 110; and executing, by the computation module 200, the application 241 that performs a computation related to the control of the robot 2 based on the content of the second memory 210. This procedure is divided into a memory synchronization procedure, a data writing procedure by the computation module 200, a data reading procedure by the computation module 200, and a control procedure of the robot 2, which will be described in detail below. Examples of the control procedure include a control procedure of executing the local control and the application control in series and a control procedure of executing the local control and the application control in parallel.

### Memory Synchronization Procedure

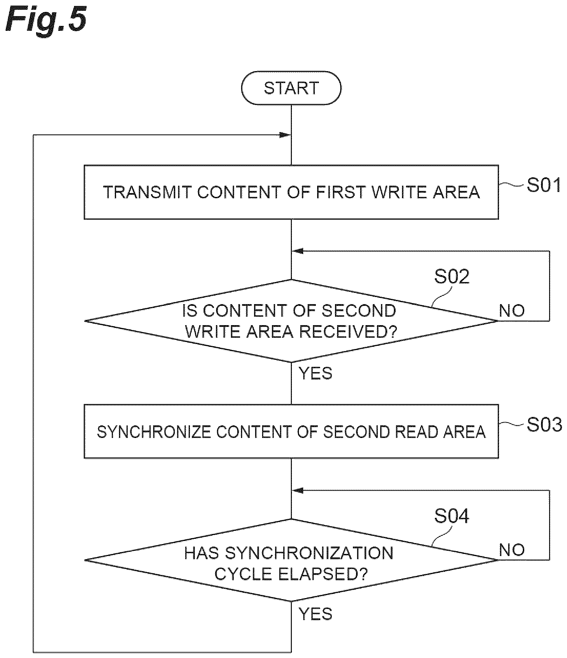

FIG. 5 is a flowchart illustrating an example memory synchronization procedure in the robot controller 100. As illustrated in FIG. 5, the robot controller 100 executes steps S01, S02, S03, S04. In the step S01, the first transmission unit 128 transmits the content of the first write area 111 to the computation module 200. In the step S02, the first synchronization unit 121 waits to receive the content of the second write area 212 from the second transmission unit 228. In the step S03, the first synchronization unit 121 synchronizes the content of the second read area 112 to the content received from the second transmission unit 228.

In the step S04, the first transmission unit 128 checks whether a predetermined synchronization cycle has elapsed. If it is determined in the step S04 that the synchronization cycle has not elapsed, the robot controller 100 returns processing to the step S01. The robot controller 100 repeats the above processing.

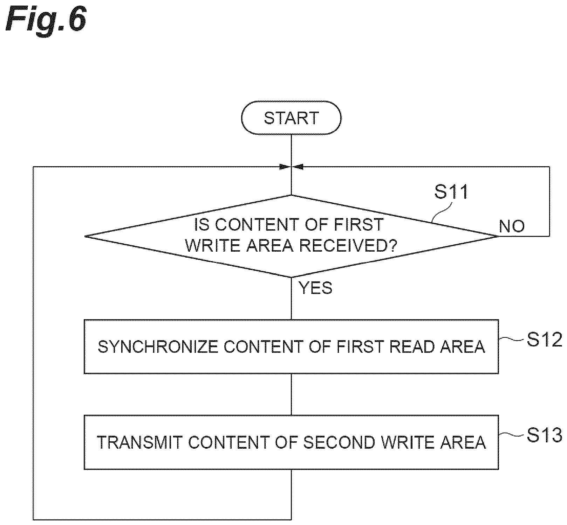

FIG. 6 is a flowchart illustrating an example memory synchronization procedure in the computation module 200. As illustrated in FIG. 6, the computation module 200 executes steps S11, S12, S13. In the step S11, the second synchronization unit 221 waits to receive the content of the first write area 111 from the first transmission unit 128. In the step S12, the second synchronization unit 221 synchronizes the content of the first read area 211 to the content received from the first transmission unit 128. In the step S13, the second transmission unit 228 transmits the content of the second write area 212 to the robot controller 100. The computation module 200 then returns the processing to the step S11. The computation module 200 repeats the above processing.

By the above procedure, in the robot controller 100, the content of the first write area 111 is repeatedly transmitted at a synchronization cycle, and the content of the second read area 112 is repeatedly synchronized with the content of the second write area 212. In the computation module 200, the content of the second write area 212 is repeatedly transmitted at a synchronization cycle, and the content of the first read area 211 is repeatedly synchronized with the content of the first write area 111.

### Data Writing Procedure

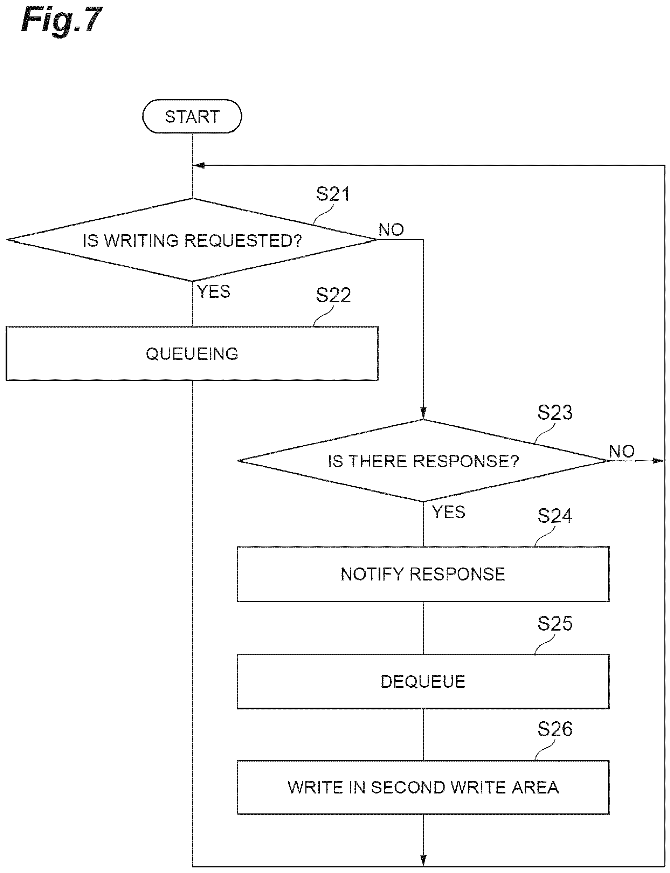

FIG. 7 is a flowchart illustrating an example data writing procedure by the memory manager 223. As illustrated in FIG. 7, the computation module 200 executes a step S21. In the step S21, the memory manager 223 checks whether the application 241 is making a request to write data. If it is determined in the step S21 that there is a request to write data, the computation module 200 executes a step S22. In the step S22, the memory manager 223 queues the request to write data in the request storage unit 225.

If it is determined in the step S21 that there is no request to write data, the computation module 200 executes a step S23. In the step S23, the memory manager 223 checks whether there is a response in the first read area 211 corresponding to the data read from the second read area 112. If it is determined in the step S23 that there is no response, the computation module 200 returns the processing to the step S21. If it is determined in the step S23 that there is a response, the computation module 200 executes steps S24, S25, S26. In the step S24, the memory manager 223 passes a response to the application 241 that made the request to write the read data. In the step S25, the memory manager 223 dequeues the request subsequent to the request corresponding to the response from the request storage unit 225. In the step S26, the memory manager 223 writes the data corresponding to the dequeued request in the second write area 212. After executing the step S22 or the step S26, the computation module 200 returns processing to the step S21. The computation module 200 repeats the above processing.

### Procedure for Reading Data

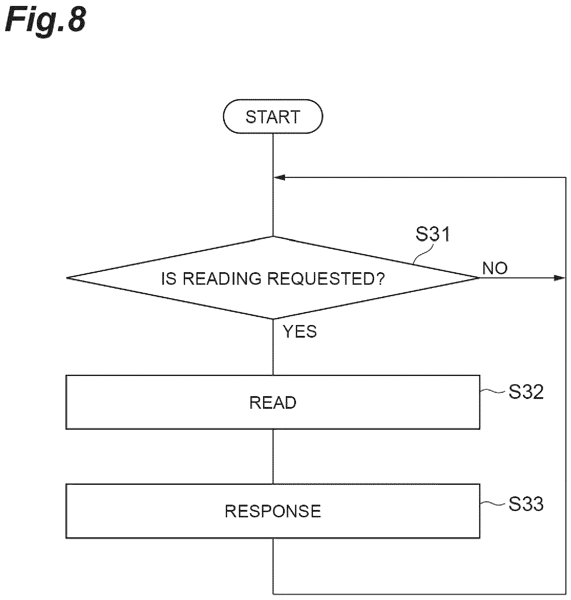

FIG. 8 is a flowchart illustrating an example data reading procedure. As illustrated in FIG. 8, the computation module 200 executes steps S31, S32, S33. In the step S31, the memory manager 223 waits for the application 241 to make a request to read data. In the step S32, the memory manager 223 reads the data corresponding to the request from the first read area 211. In the step S33, the memory manager 223 passes a response including the read data to the application 241. The computation module 200 then returns the processing to the step S31. The computation module 200 repeats the above processing.

### Control Procedure of Serially Executing Local Control and Application Control

The "local control" means control based on a control command generated by the local interpreter 125, and the "application control" means control based on a control command generated by the memory interpreter 123. Hereinafter, an example in which the application control is executed after an interruption of the local control and the local control is resumed after an execution of the application control will be described. As the application control, an example control for operating the robot 2 in an operation path based on the surrounding environment information is described.

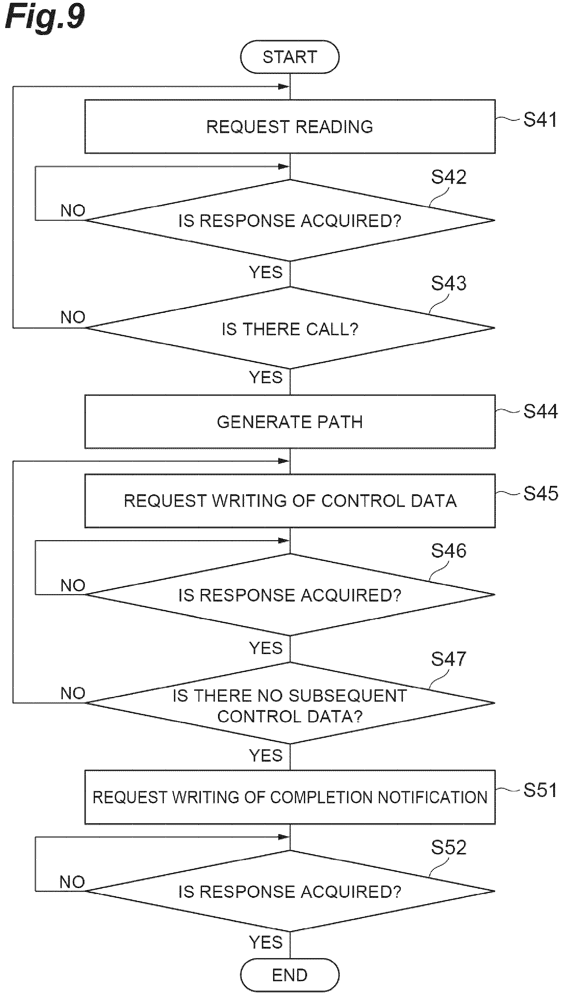

FIG. 9 is a flowchart illustrating an example procedure in which the application 241 generates an operation path in response to a call from the robot controller 100. As illustrated in FIG. 9, the computation module 200 that executes the application 241 executes steps S41, S42, S43. In the step S41, the application 241 makes a request to read the call data described above via the monitoring API 233. In the step S42, the application 241 waits for a response to the request to be passed from the memory manager 223. In the step S43, the application 241 checks, based on the call data, whether a start of processing has been instructed (whether a call has been made). If it is determined in the step S43 that the start of the process has not been instructed, the computation module 200 returns the processing to the step S41. Thereafter, the reading of the call data is repeated until it is determined that the start of the processing is instructed based on the call data.

The call data instructing the start of processing includes information designating a start point and an end point of the operation path. The start point includes a movement start position and a movement start posture of the tip portion 18. The end point includes a movement completion position and a movement completion posture of the tip portion 18.

If it is determined in the step S43 that the start of the processing is instructed, the computation module 200 executes steps S44, S45, S46. In the step S44, the application 241 generates an operation path from the start point to the end point based on surrounding environment information stored in advance. For example, the surrounding environment information includes a three-dimensional model of the robot 2 and a three-dimensional model of a surrounding object of the robot 2. The application 241 generates the operation path based on the surrounding environment information so that the robot 2 does not interfere with (collide with) the surrounding object. For example, the application 241 generates one or more pieces of control data respectively corresponding to one or more via points including the end point. Each of the one or more pieces of control data includes a target position corresponding to the via-point and a target speed.

In the step S45, the application 241 makes a request for writing control data that has not been written in the second write area 212 yet among one or more pieces of the generated control data via the motion API 231. In the step S46, the application 241 waits for a response to the request to be passed from the memory manager 223. In a step S47, the application 241 checks for the next control data that has not been written in the second write area 212. If it is determined in the step S47 that there is next control data, the computation module 200 returns the processing to the step S45. Thereafter, the request for writing the control data is repeated until the writing of all the control data is completed.

If it is determined in the step S47 that all the control data has been written in the second write area 212, the computation module 200 executes steps S51, S52. In the step S51, the application 241 makes, via the motion API 231, a request to write the execution completion notification. In the step S52, the application 241 waits for a response to the request to be passed from the memory manager 223. This completes the procedure for generating a path with the application 241.

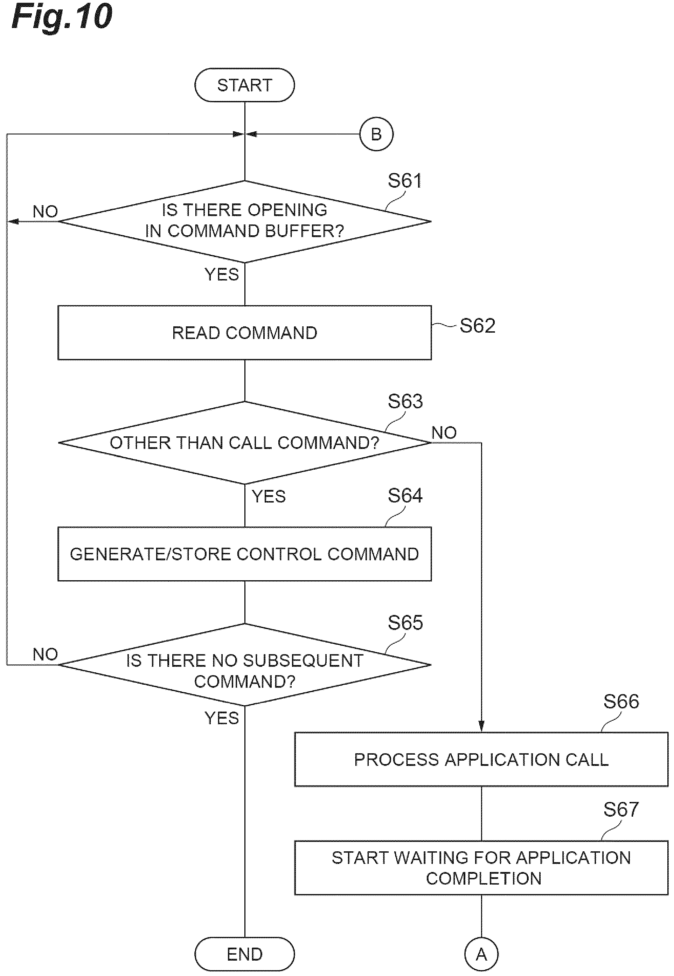

FIG. 10 is a flowchart illustrating an example procedure for reading a plurality of local commands including a call of the application 241 for generating a path. As illustrated in FIG. 10, the robot controller 100 executes steps S61, S62, S63. In the step S61, the local interpreter 125 waits for the command buffer 132 to have an opening. In the step S62, the local interpreter 125 reads the local command from the command storage unit 124. In the step S63, the local interpreter 125 checks whether the local command is a command for calling the application 241. Hereinafter, the command for calling the application 241 is referred to as a "call command".

If it is determined in the step S63 that the local command is not the call command, the robot controller 100 executes steps S64, S65. In the step S64, the local interpreter 125 generates a control command based on the read local command, and stores the control command in the command buffer 132. In the step S65, the local interpreter 125 checks whether there is a next local command in the command storage unit 124. If it is determined in the step S65 that there is the next local command, the robot controller 100 returns the processing to the step S61.

If it is determined in the step S62 that the local command is the call command, the robot controller 100 executes steps S66, S67. In the step S66, the robot control unit 130 writes call data for the application 241 in the first write area 111. In the step S67, the local interpreter 125 starts waiting for the execution completion notification of the application 241.

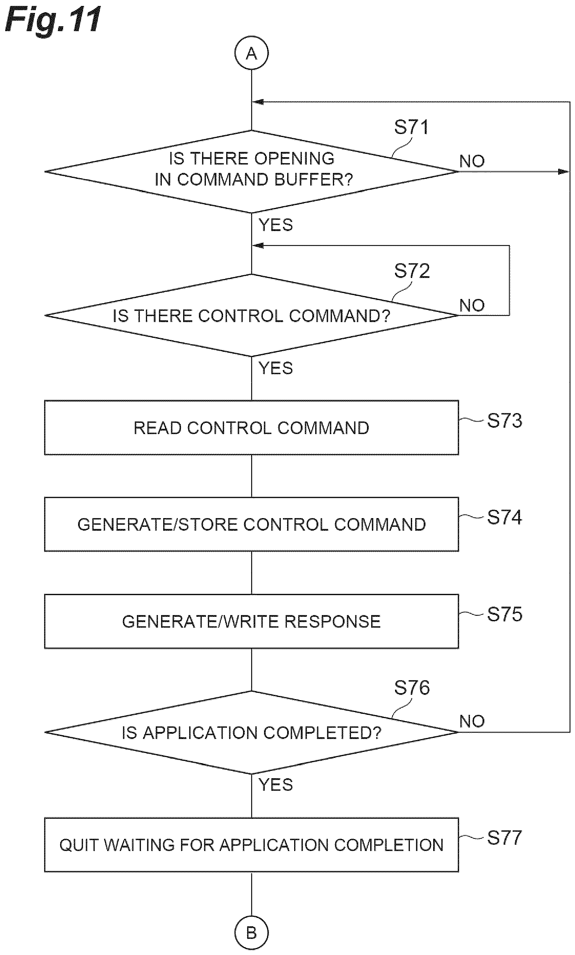

FIG. 11 is a flowchart illustrating an example procedure for reading control data generated by the application 241. As illustrated in FIG. 11, the robot controller 100 then executes steps S71, S72. In the step S71, the memory interpreter 123 waits for the command buffer 132 to have an opening. In the step S72, the memory interpreter 123 waits for the control data written by the application 241 to be stored in the second read area 112.

Next, the robot controller 100 executes steps S73, S74, S75. In the step S73, the memory interpreter 123 reads the control data from the second read area 112. In the step S74, the memory interpreter 123 generates a control command based on the control data and stores the control command in the command buffer 132. In the step S75, the response generation unit 127 generates a response corresponding to the control data and stores the response in the first write area 111.

The robot controller 100 then executes a step S76. In the step S76, the memory interpreter 123 checks whether the execution completion notification written by the application 241 is stored in the second read area 112. If it is determined in the step S76 that the execution completion notification is not stored in the second read area 112, the robot controller 100 returns the processing to the step S71.

If it is determined that the execution completion notification is stored in the second read area 112 in the step S76, the robot controller 100 executes a step S77. In the step S77, the robot control unit 130 causes the local interpreter 125 to cancel waiting for the execution completion notification of the application 241. Thus, the reading of the local command by the local interpreter 125 can be resumed. The robot controller 100 then returns processing to the step S61 in FIG. 10. Thereafter, the reading of the local command by the local interpreter 125 is continued until it is determined in the step S65 that there is no next local command. If it is determined in the step S65 that there is no next local command, the robot controller 100 completes reading of the local command.

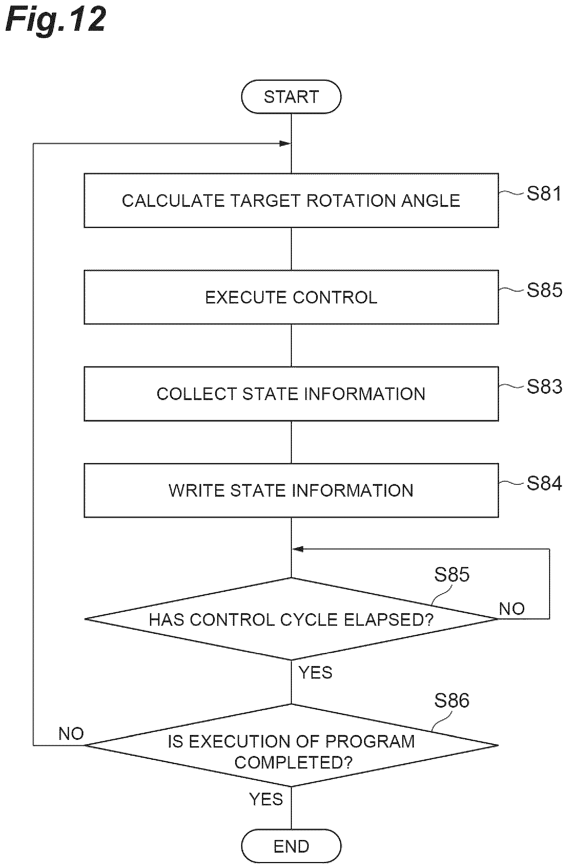

FIG. 12 is a flowchart illustrating an example execution procedure of control based on the control command. As illustrated in FIG. 12, the robot controller 100 executes steps S81, S82. In the step S81, the motion control unit 131 calculates target rotation angles of the joints 31, 32, 33, 34, 35, 36 so as to move the tip portion 18 at a target speed along an operation path represented by one or more control commands stored in the command buffer 132. In the step S82, the motion control unit 131 causes the angles of the joints 31, 32, 33, 34, 35, 36 to follow the target rotation angles by the actuators 41, 42, 43, 44, 45, 46.

The robot controller 100 then executes steps S83, S84. In the step S83, the state collection unit 122 acquires the state information of the robot 2. In the step S84, the state collection unit 122 writes the state information of the robot 2 into the first write area 111.

The robot controller 100 then executes steps S85, S86. In the step S85, the motion control unit 131 waits for the control cycle to elapse. In the step S86, the motion control unit 131 checks whether the execution of the operation program is completed. If it is determined in the step S86 that the execution of the operation program is not completed, the robot controller 100 returns the processing to the step S81. Thereafter, the above control processing is repeated in the control cycle until the execution of the operation program is completed. If it is determined in the step S86 that the execution of the operation program is completed, the robot controller 100 completes the control of the motion of the robot 2.

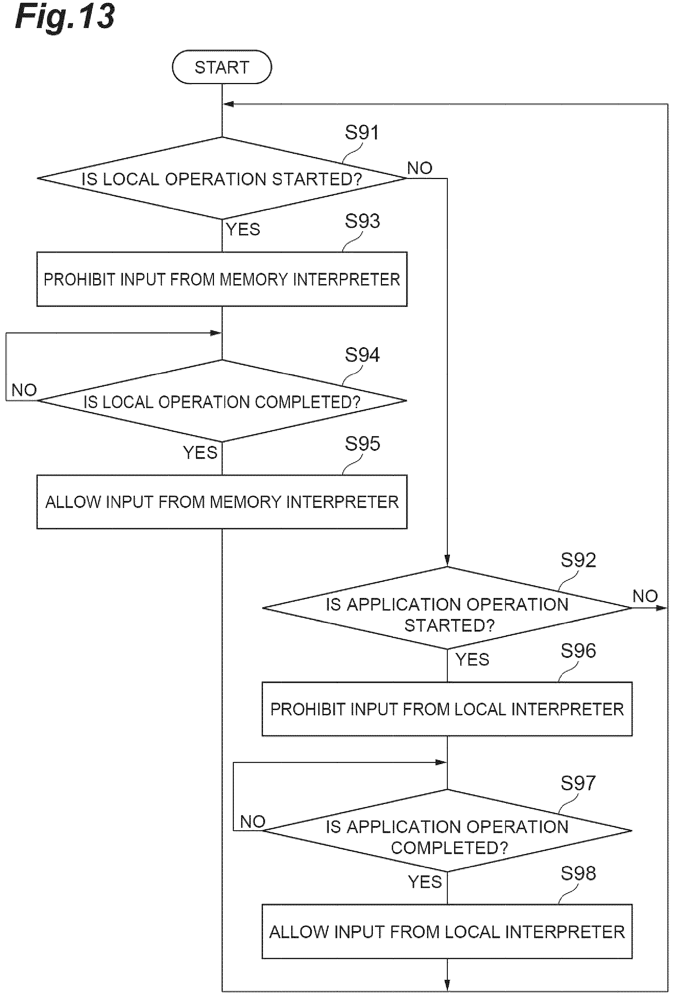

As mentioned above, the robot controller 100 may further include the command selection unit 126. FIG. 13 is a flowchart illustrating an example command selection procedure executed by the robot controller 100 by the command selection unit 126. As illustrated in FIG. 13, the robot controller 100 executes a step S91. In the step S91, the command selection unit 126 checks whether the operation of the robot 2 based on the local command is started. If it is determined in the step S91 that the operation of the robot 2 based on the local command is not started, the robot controller 100 executes a step S92. In the step S92, the command selection unit 126 checks whether the operation of the robot 2 based on the execution result of the application 241 is started. If it is determined in the step S92 that the operation of the robot 2 is not started, the robot controller 100 returns the processing to the step S91.

If it is determined in the step S91 that the operation of the robot 2 based on the local command is started, the robot controller 100 executes steps S93, S94, S95. In the step S93, the command selection unit 126 prohibits input of control commands from the memory interpreter 123 to the motion control unit 131. For example, the command selection unit 126 prohibits the memory interpreter 123 from writing a control command in the command buffer 132. In the step S94, the command selection unit 126 waits for completion of the operation of the robot 2 based on the local command. In the step S95, the command selection unit 126 cancels the prohibition of the input of the control command from the memory interpreter 123 to the motion control unit 131.

If it is determined in the step S92 that the operation of the robot 2 based on the execution result of the application 241 has been started, the robot controller 100 executes steps S96, S97, and S98. In the step S96, the command selection unit 126 prohibits input of control commands from the local interpreter 125 to the motion control unit 131. For example, the command selection unit 126 prohibits the local interpreter 125 from writing a control command in the command buffer 132. In the step S97, the command selection unit 126 waits for the completion of operation of the robot 2 based on execution results of the application 241. In the step S98, the command selection unit 126 cancels the prohibition of the input of the control command from the local interpreter 125 to the motion control unit 131.

After executing the step S95 or the step S98, the robot controller 100 returns processing to the step S91. The robot controller 100 repeats the above processing.

### Control Procedure for Executing Local Control and Application Control in Parallel

Hereinafter, an example in which a part of the local control is executed in parallel with the application control will be described. As the application control, an example control in which the control command is corrected based on the surrounding environment information is described.

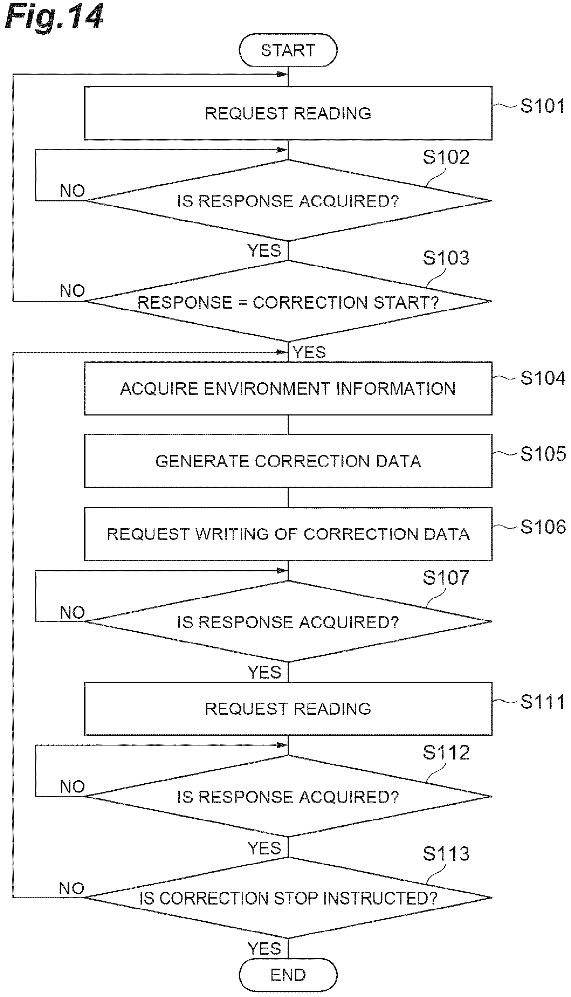

FIG. 14 is a flowchart illustrating an example procedure in which the application 241 performs a correction computation in response to a call from the robot controller 100. As illustrated in FIG. 14, the computation module 200 that executes the application 241 executes steps S101, S102, S103. In the step S101, the application 241 makes a request for reading of call data via the monitoring API 233. In the step S102, the application 241 waits for a response to the request to be passed from the memory manager 223. In the step S103, the application 241 confirms whether start of the correction is instructed based on the call data. If it is determined in the step S103 that the start of correction is not instructed, the computation module 200 returns the processing to the step S101. Thereafter, the reading of the call data is repeated until it is determined that the correction start is instructed based on the call data.

Next, the computation module 200 executes steps S104, S105, S106, S107. In the step S104, the application 241 acquires environmental information such as an image captured by a camera. In the step S105, the application 241 generates the corrected data based on the environmental information. In the step S106, the application 241 makes a request to write the correction data via the motion API 231. In the step S107, the application 241 waits for a response to the request to be passed from the memory manager 223.

Next, the computation module 200 executes steps S111, S112, S 113. In the step S111, the application 241 makes a request for reading of call data via the monitoring API 233. In the step S112, the application 241 waits for a response to the request to be passed from the memory manager 223. In the step S113, the application 241 checks whether the correction stop is instructed based on the call data.

If it is determined in the step S113 that the correction stop is not instructed, the computation module 200 returns the processing to the step S104. Thereafter, the generation of the correction data is repeated until it is determined that the correction stop is instructed based on the call data. If it is determined in the step S 113 that the correction stop is instructed based on the call data, the computation module 200 completes the generation of the correction data.

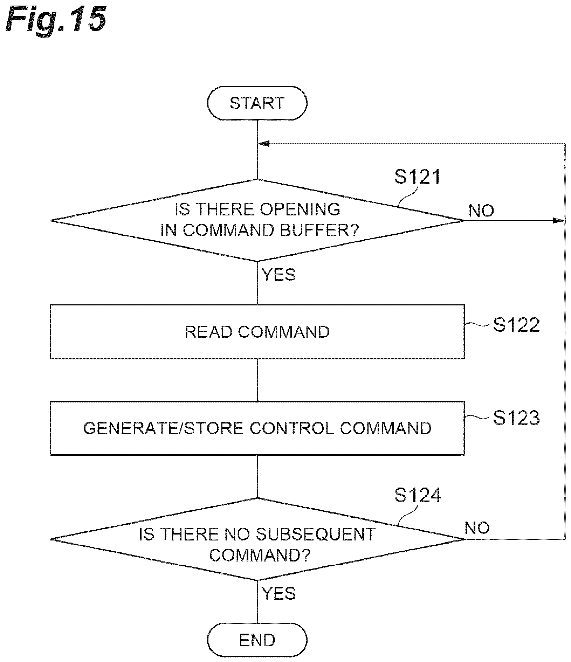

FIG. 15 is a flowchart illustrating an example procedure for reading a plurality of local commands including the application 241 call for performing a correction computation. As illustrated in FIG. 15, the robot controller 100 executes S121, S122, S123, S124. In the step S121, the local interpreter 125 waits for the command buffer 132 to have an opening. In the step S122, the local interpreter 125 reads the local command from the command storage unit 124. In the step S123, the local interpreter 125 generates a control command based on the read local command, and stores the control command in the command buffer 132. In the step S124, the local interpreter 125 checks whether there is a next local command in the command storage unit 124. If it is determined in the step S124 that there is the next local command, the robot controller 100 returns the processing to the step S121.

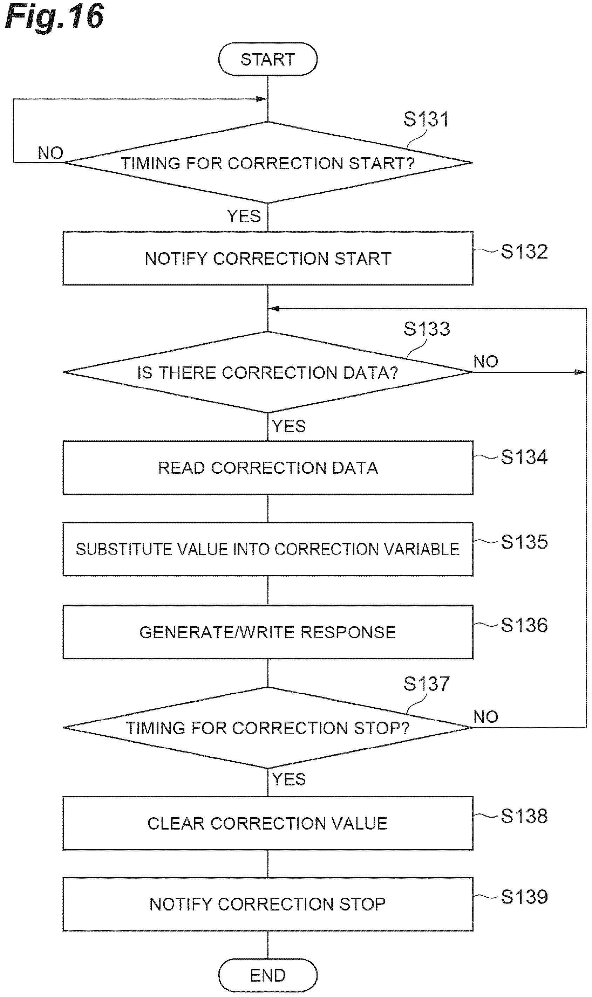

FIG. 16 is a flowchart illustrating an example procedure for reading correction data generated by the application 241. At the start of this flowchart, the value of the correction variable described above is zero (no correction). As illustrated in FIG. 16, the robot controller 100 executes steps S131, S132. In the step S131, the robot control unit 130 waits for the timing to execute a local command that causes the application 241 to start correction, based on the execution status of the control command stored in the command buffer 132. Hereinafter, the local command for causing the application 241 to start the correction is referred to as a "correction start command". In the step S132, the robot control unit 130 writes call data that indicates the start of the correction in the first write area 111.

Next, the robot controller 100 executes S133, S134, S135, S136. In a step S133, the memory interpreter 123 waits for the correction data written by the application 241 to be stored in the second read area 112. In a step S134, the memory interpreter 123 reads the corrected data from the second read area 112. In a step S135, the memory interpreter 123 generates the correction command described above and inputs it to the robot control unit 130. The robot control unit 130 substitutes the correction data into the above-described correction variable based on the correction command. In a step S136, the response generation unit 127 generates a response corresponding to the corrected data and stores it in the first write area 111.

The robot controller 100 then executes a step S137. In the step S137, the robot control unit 130 checks whether it is time to execute a local command that causes the application 241 to stop correction based on the execution status of the control command stored in the command buffer 132. Hereinafter, the local command for causing the application 241 to stop the correction is referred to as a "correction stopping command".

If it is determined in the step S137 that it is not the time to execute the correction stopping command, the robot controller 100 returns the processing to the step S133. Thereafter, the reading of the correction data and the substitution of the correction data into the correction variable are repeated until the timing at which the correction stopping command is executed.

If it is determined in the step S137 that it is the time to execute the correction stopping command, the robot controller 100 executes steps S138, S139. In the step S138, the robot control unit 130 clears (zeros) the correction variable. In the step S139, the robot control unit 130 writes call data to the first write area 111 representing a correction stop. Thus, the reading procedure of the correction data is completed.

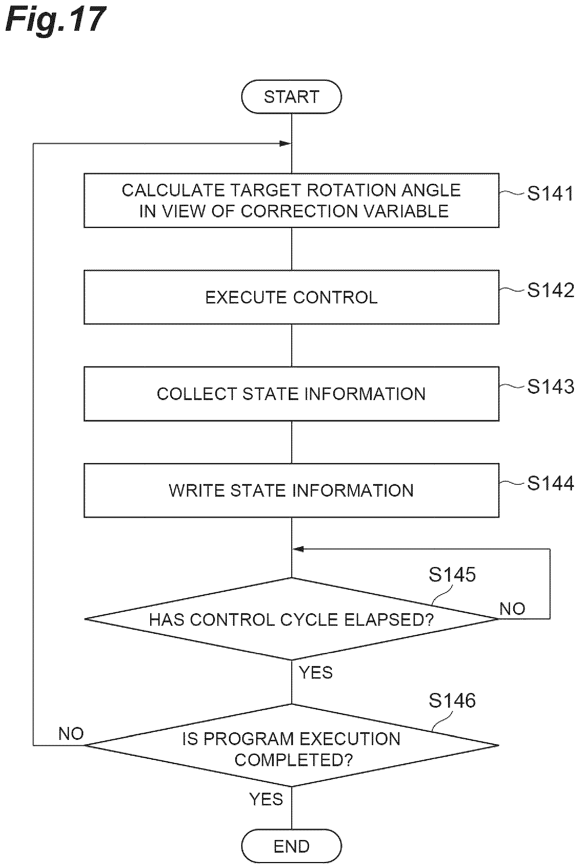

FIG. 17 is a flowchart illustrating an example execution procedure of the control based on the control command and the correction data. As illustrated in FIG. 17, the robot controller 100 executes a step S141. In the step S141, the motion control unit 131 calculates the target rotation angles of the joints 31, 32, 33, 34, 35, 36 so as to move the tip portion 18 at the target speed along the corrected path obtained by correcting the operation path represented by one or more control commands based on the correction variable. The corrected path in a case where the correction variable is zero is the same as the operation path represented by the one or more control commands.

Next, the robot controller 100 executes S142, S143, S144, and S145 that are similar to the steps S82, S83, S84, S85, and executes a step S146 that is similar to the step S86. In the step S146, the motion control unit 131 checks whether the execution of the operation program is completed. If it is determined in the step S146 that the execution of the operation program is not completed, the robot controller 100 returns the processing to the step S141. Thereafter, the above control processing is repeated in the control cycle until the execution of the operation program is completed. If it is determined in the step S146 that the execution of the operation program is completed, the robot controller 100 completes the control of the motion of the robot 2.

### Summary

As described above, the control system 3 includes: the robot controller 100 configured to control the robot 2; and the computation module 200 configured to communicate with the robot controller 100, wherein the robot controller 100 includes the first memory 110 in which state information of the robot 2 is stored, and wherein the computation module 200 includes: the second memory 210 whose content is synchronized with a content of the first memory 110; and the processor 201 capable of executing the application 241 that executes a computation related to control of the robot 2 based on the content of the second memory 210.

Since the first memory 110 and the second memory 210 are synchronized, it is possible to create the application 241 related to control of the robot 2, with data writing or reading in the second memory 210. Accordingly, the application 241 can be easily constructed without considering special rules such as a protocol of data exchange between the robot controller 100 and the computation module 200. With the constructed application 241, it is possible to assist or lead the control of the robot 2 by the robot controller 100. Accordingly, the function of the robot controller 100 can be easily expanded.

The robot controller 100 may further include the first synchronization unit 121 configured to periodically synchronize the content of the first memory 110 with the content of the second memory 210 via network communication, and the computation module 200 may further include the second synchronization unit 221 configured to periodically synchronize the content of the second memory 210 with the content of the first memory 110 via the network communication. The first memory 110 and the second memory 210 are periodically updated with each other via network communication. Accordingly, the application 241 can be easily constructed without being conscious of the protocol of the network communication or the like. In addition, by causing the network communication to simply synchronize between the memories, the robot controller 100 and the computation module 200 can be connected by general-purpose network communication, and the construction cost of the control system 3 can be reduced. By using the general-purpose network communication, various devices can be connected to the robot controller 100 as the computation module 200. This can be used to significantly reduce the cost for developers of the application 241 to learn the architecture of the computation module 200, by setting a device having a more general-purpose architecture as the computation module 200.

The computation module 200 may further include the memory manager 223 configured to execute at least one of writing and reading of data to the second memory 210 based on a request from the application 241. By making the request to the memory manager 223, the data can be easily read or written without grasping the configuration or the like of the second memory 210. Thus, the construction cost of the application 241 can be further reduced. Further, by restricting direct access to the second memory 210, unauthorized writing of data and the like can be prevented. As a result, the debugging cost in the development of the application 241 can be reduced.

The computation module 200 may further include the application storage unit 240 for storing one or more applications 241, and the memory manager 223 may be configured to notify the content of the second memory 210 associated with the application 241 stored in the application storage unit 240 to the associated application 241. A notification can be made from the robot controller 100 to the application 241 via the first memory 110 and the second memory 210. Thus, the application 241 that operates based on the notification from the robot controller 100 can be easily constructed. With the application 241 which operates based on the notification from the robot controller 100, it is possible to activate the application 241 requested from the robot controller 100 based on the notification from the robot controller 100. Further, at least a part of the computation in the activated application 241 can be started at the timing requested from the robot controller 100.

The memory manager 223 may include the API 230 corresponding to control of the robot 2, and the memory manager 223 may be configured to, when a request from the application 241 is received via the API 230, write data corresponding to the request in the second memory 210. The function expanded by the application 241 can be easily reflected in the control of the robot 2 by the API 230. In addition, since the second memory 210 is wrapped by the API 230, security against erroneous operation, secret leakage, and the like can be improved.

The robot controller 100 may further include the state collection unit 122 configured to write at least the state information of the robot 2 in the first memory 110, and the memory manager 223 may be configured to, in response to a request from the application 241, acquire the state information from the second memory 210 and to pass the state information to the application 241. The state information of the robot 2 needed to construct the application 241 is continuously updated in the second memory 210. Accordingly, the application 241 based on the state information of the robot 2 can be easily constructed only by incorporating reading of the state information from the second memory 210 into the application 241. In addition, by limiting the state information to be written in the first memory 110, it is possible to easily prevent the state information of the robot 2 from being unlimitedly acquired.

The state collection unit 122 may be configured to write state information in the first write area 111 of the first memory 110, and the memory manager 223 may be configured to: acquire the state information from the first read area 211 of the second memory 210 corresponding to the first write area 111 and pass the state information to the application 241; and write data based on a request from the application 241 in the second write area 212 different from the first read area 211 in the second memory 210. Since the writing of the data from the application 241 is executed to the second write area 212 different from the first read area 211 for acquiring the state information, the state information stored by the first read area 211 can be always synchronized with the state information written by the state collection unit 122. Thus, the state information can be provided to the application 241 at any timing. Accordingly, the application 241 based on the state information can be easily constructed without being conscious of the acquisition timing of the state information.

The robot controller 100 may further include the memory interpreter 123 configured to generate a control command executable inside the robot controller 100 based on the data read from the first memory 110. The function of the robot controller 100 for controlling the robot 2 by the control command can be easily expanded by the computation result of the computation module 200. Further, by freely combining the operation program generated to control the robot 2 by the control command and the computation result of the computation module 200, it is possible to cause the robot controller 100 to execute more various controls. The operation program itself generated in the past can be developed separately from the computation module 200.

The robot controller 100 may further include: the command storage unit 124 capable of storing a plurality of local commands; the local interpreter 125 configured to sequentially read the plurality of local commands from the command storage unit 124 and to generate a control command; and the motion control unit 131 configured to control a motion of the robot 2 based on the control command generated by at least one of the memory interpreter 123 and the local interpreter 125. It is possible to operate the robot 2 based on a plurality of local commands and to operate the robot 2 based on the computation result of the computation module 200. Furthermore, it is also possible to operate the robot 2 based on a combination of a plurality of local commands and the computation result of the computation module 200. Accordingly, the function of controlling the robot 2 based on the local command can be easily expanded by the computation result of the computation module 200. In addition, both the local command and the computation result of the computation module 200 are converted into control commands of the same format. Accordingly, the motion control unit 131 can be shared for operating the robot 2 based on a plurality of local commands and operating the robot 2 based on the computation result of the computation module 200. Therefore, the configuration of the robot controller 100 can be simplified.

The robot controller 100 may further include the command selection unit 126 configured to prohibit input of the control command from the memory interpreter 123 to the motion control unit 131 while the robot 2 is operating based on the control command generated by the local interpreter 125, and to prohibit input of the control command from the local interpreter 125 to the motion control unit 131 while the robot 2 is operating based on the control command generated by the memory interpreter 123. It is possible to prevent the control command from the local interpreter 125 and the control command from the memory interpreter 123 from being unexpectedly mixed to cause a malfunction of the robot 2.

The application 241 may be configured to generate data used for control based on the local command and to request the memory manager 223 to write the generated data, and the motion control unit 131 may be configured to control the motion of the robot 2 based on the generated data read from the first memory 110 and the local command read from the command storage unit 124. Resources of the robot controller 100 and resources of the computation module 200 can be combined to provide more advanced control.

The robot controller 100 may include: a local control mode in which the motion control unit 131 controls the motion of the robot 2 based on the control command generated by the local interpreter 125; and an application control mode in which the motion control unit 131 controls the motion of the robot 2 based on the control command generated by the memory interpreter 123 based on a computation result by the application 241. By selectively executing the local control mode and the application control mode, the function of the robot controller 100 can be easily expanded. In either mode, since the control by the motion control unit 131 is executed based on the control command of the same format, the computation module 200 can share a part of the architecture without changing the architecture for the local control mode. Accordingly, the control based on the computation result by the application 241 can be easily added to the robot controller 100 while utilizing the operation program generated in the past for the local control mode. The operation program itself generated in the past can be developed separately from the application 241.

The robot controller 100 may further include the response generation unit 127 that generates a response corresponding to the data read by the memory interpreter 123 and writes the response in the first memory 110, and the memory manager 223 may read the response from the second memory 210 and pass the response to the application 241 that has made a request of writing the read data. Based on the response, the application 241 that advances the computation in accordance with the execution status of the process based on the request can be easily generated.

The memory manager 223 may be configured to queue a plurality of requests from one or more applications 241 in the request storage unit 225, to sequentially dequeue the plurality of requests from the request storage unit 225, and to write data corresponding to the dequeued request in the second memory 210. Since the queuing of the request is executed by the memory manager 223, the application 241 can be constructed so as to perform the request at any time without considering the risk of erroneously overwriting the preceding request. Even in a case where two or more applications 241 can be executed at the same time, each application 241 can be constructed so as to make a request at any time without considering a request situation by another application 241. Therefore, the construction cost of the application 241 can be further reduced.

The memory manager 223 may be configured to, when reading a response from the second memory 210, dequeue, from the request storage unit 225, the request subsequent to the request corresponding to the response. Both the flexibility of the application 241 and the real-time performance in the robot controller 100 can be achieved.

The memory manager 223 may be configured to, when the request is a request for reading the state information of the robot 2, read the state information from the second memory 210 without queuing the request, and to pass the state information to the application 241 that has made the request. The acquisition delay of the state information can be prevented by excluding the request for reading the state information for which immediacy is required from the target of the queuing. In addition, resource for queuing of the request can be reduced.

In the configuration exemplified above, the computation module 200 includes: a shared memory (the second memory 210) configured to store information referred to by the robot controller 100 that controls the robot 2; the processor 201 configured to execute the application 241 that performs a computation related to control of the robot 2 based on a content of the shared memory; and the memory manager 223 configured to execute at least one of writing and reading of data to and from the shared memory based on a request from the application 241.

In addition, the computation module 200 includes: a shared memory configured to store information written by the robot controller 100 configured to control the robot 2; the application storage unit 240 configured to store one or more applications 241 configured to perform a computation based on a content of the memory; and the memory manager 223 configured to notify the content of the shared memory associated with the application 241 stored in the application storage unit 240 to the associated application 241.

The robot controller 100 includes: a shared memory (the first memory 110) configured to store information written by the computation module 200 capable of executing the application 241 that performs a computation related to control of the robot 2 based on state information of the robot 2; the state collection unit 122 configured to write at least the state information in the shared memory; a memory interpreter 123 configured to generate a control command executable inside the robot controller 100 based on data written in the shared memory based on a computation result by the application 241; and the motion control unit 131 configured to control a motion of the robot 2 based on the control command.

The control system 3 includes: the processor 201 capable of executing the application 241 that performs a computation related to control of the robot 2; the memory manager 223 configured to execute at least one of writing and reading of data to and from a shared memory (the second memory 210) based on a request from the application 241; the command storage unit 124 capable of storing a plurality of local commands; the local interpreter 125 configured to sequentially read the plurality of local commands from the command storage unit 124 and to generate a control command; the memory interpreter 123 configured to generate the control command based on the data read from the shared memory (the first memory 110); and the motion control unit 131 configured to control a motion of the robot 2 based on the control command generated by at least one of the memory interpreter 123 and the local interpreter 125. In this configuration, the shared memory may not necessarily be divided into the first memory 110 and the second memory 210 that are synchronized with each other.

The control system 3 includes: the command storage unit 124 capable of storing a plurality of local commands for controlling the robot 2; the computation module 200 configured to generate data used in control based on a local command and to write generated data in a shared memory; and the motion control unit 131 configured to control a motion of the robot 2 based on the generated data read from the shared memory and the local command read from the command storage unit 124.

Although the embodiments have been described above, the present invention is not necessarily limited to the above-described embodiments, and various modifications can be made without departing from the spirit of the present invention.

### [Appendix]

Various exemplary embodiments included in the present disclosure will now be described as follows.
[1] A control system, comprising:
   a robot controller configured to control a robot; and
   a computation module configured to communicate with the robot controller,
   wherein the robot controller comprises a first memory in which state information of the robot is stored, and
   wherein the computation module comprises:
      a second memory whose content is synchronized with a content of the first memory; and
      a processor capable of executing an application that performs a computation related to control of the robot based on the content of the second memory.
[2] The control system according to [1], wherein the robot controller further comprises a first synchronization unit configured to periodically synchronize the content of the first memory with the content of the second memory via network communication, and
   wherein the computation module further comprises a second synchronization unit configured to periodically synchronize the content of the second memory with the content of the first memory via the network communication.
[3] The control system according to [1] or [2], wherein the computation module further comprises a memory manager configured to execute at least one of writing and reading of the data to and from the second memory based on a request from an application.
[4] The control system according to [3], wherein the computation module further comprises an application storage unit configured to store one or more applications, and
   wherein the memory manager is configured to notify the content of the second memory associated with an application stored in the application storage unit to the associated application.
[5] The control system according to [3] or [4], wherein the memory manager comprises an API corresponding to control of the robot, the memory manager being configured to, when a request from an application is received via the API, write data corresponding to the request in the second memory.
[6] The control system according to any one of [3] to [5], wherein the robot controller further comprises a state collection unit configured to write at least the state information of the robot in the first memory, and
   wherein the memory manager is configured to, in response to a request from an application, acquire the state information from the second memory and to pass the state information to the application.
[7] The control system according to [6], wherein the state collection unit is configured to write the state information in a first write area of the first memory, and
   wherein the memory manager is configured to:
   acquire the state information from a first read area of the second memory corresponding to the first write area, and pass the state information to the application; and
   write data based on a request from the application in a second write area different from the first read area in the second memory.
[8] The control system according to [7], wherein the robot controller further comprises a memory interpreter configured to generate a control command executable inside the robot controller based on the data read from the first memory.
[9] The control system according to [8], wherein the robot controller comprises:
   a command storage unit capable of storing a plurality of local commands;
   a local interpreter configured to sequentially read the plurality of local commands from the command storage unit and to generate the control command; and
   a motion control unit configured to control a motion of the robot based on the control command generated by at least one of the memory interpreter and the local interpreter.
[10] The control system according to [9], wherein the robot controller further comprises a command selection unit configured to prohibit input of the control command from the memory interpreter to the motion control unit while the robot is operating based on the control command generated by the local interpreter, and to prohibit input of the control command from the local interpreter to the motion control unit while the robot is operating based on the control command generated by the memory interpreter.
[11] The control system according to [9] or [10], wherein an application is configured to generate data to be used in control based on a local command and to request the memory manager to write generated data, and
   wherein the motion control unit is configured to control the motion of the robot based on the generated data read from the first memory and the local command read from the command storage unit.
[12] The control system according to any one of [9] to [11], wherein the robot controller comprises:
   a local control mode in which the motion control unit controls the motion of the robot based on the control command generated by the local interpreter; and
   an application control mode in which the motion control unit controls the motion of the robot based on the control command generated by the memory interpreter based on a computation result by an application.
[13] The control system according to [12], wherein the robot controller further comprises a response generation unit configured to generate a response corresponding to the data read by the memory interpreter and write the response in the first memory, and
   wherein the memory manager is configured to read the response from the second memory and to pass the response to the application that has made a request of writing read data.
[14] The control system according to [12] or [13], wherein the memory manager is configured to queue a plurality of requests from one or more applications in a request storage unit, to sequentially dequeue the plurality of requests from the request storage unit, and write data corresponding to the dequeued request in the second memory.
[15] The control system according to [14], wherein the memory manager is configured to, when reading a response from the second memory, dequeue, from the request storage unit, a request subsequent to a request corresponding to the response.
[16] The control system according to [14] or [15], wherein the memory manager is configured to, when the request is a request for reading the state information of the robot, read the state information from the second memory without queuing the request, and to pass the state information to the application that has made the request.
[17] A computation module, comprising:
   a shared memory configured to store information referred to by a robot controller that controls a robot;
   a processor capable of executing an application that performs a computation related to control of the robot based on a content of the shared memory; and
   a memory manager configured to execute at least one of writing and reading of data to and from the shared memory based on a request from an application.
[18] A computation module, comprising:
   a shared memory configured to store information written by a robot controller configured to control a robot;
   an application storage unit configured to store one or more applications that perform a computation based on a content of a memory; and
   a memory manager configured to notify a content of the shared memory associated with an application stored in the application storage unit to the associated application.
[19] A robot controller, comprising:
   a shared memory configured to store information written by a computation module capable of executing an application that performs a computation related to control of a robot based on state information of the robot;
   a state collection unit configured to write at least the state information in the shared memory;
   a memory interpreter configured to generate a control command executable inside the robot controller based on data written in the shared memory based on a computation result by an application; and
   a motion control unit configured to control a motion of the robot based on the control command.
[20] A control system, comprising:
   a processor capable of executing an application that performs a computation related to control of a robot;
   a memory manager configured to execute at least one of writing and reading of data to and from a shared memory based on a request from an application;
   a command storage unit capable of storing a plurality of local commands;
   a local interpreter configured to sequentially read the plurality of local commands from the command storage unit and to generate a control command;
   a memory interpreter configured to generate the control command based on data read from the shared memory; and
   a motion control unit configured to control a motion of the robot based on the control command generated by at least one of the memory interpreter and the local interpreter.
[21] A control system, comprising:
   a command storage unit capable of storing a plurality of local commands for controlling a robot;
   a computation module configured to generate data used in control based on a local command and to write generated data in a shared memory; and
   a motion control unit configured to control a motion of the robot based on the generated data read from the shared memory and the local command read from the command storage unit.
[22] A control method, comprising:
   storing, by a robot controller configured to control a robot, state information of the robot in a first memory;
   synchronizing, by a computation module configured to communicate with the robot controller, a content of a second memory to a content of the first memory; and
   executing, by the computation module, an application that performs a computation related to control of the robot based on the content of the second memory.

### Reference Signs List

2: robot; 3: control system; 100: robot controller; 200: computation module; 110: first memory; 210: second memory; 201: processor; 111: first write area; 211: first read area; 212: second write area; 121: first synchronization unit; 221: second synchronization unit; 223: memory manager; 230: API; 240: application storage unit; 241: application; 122: state collection unit; 225: request storage unit; 123: memory interpreter; 131: motion control unit; 124: command storage unit; 125: local interpreter; 126: command selection unit; 127: response generation unit.

## Claims

1. A control system comprising:
a robot controller configured to control a robot; and
a computation module configured to communicate with the robot controller,
wherein the robot controller comprises a first memory in which state information of the robot is stored, and
wherein the computation module comprises:
a second memory whose content is synchronized with a content of the first memory; and
a processor capable of executing an application that performs a computation related to control of the robot based on the content of the second memory.

2. The control system according to claim 1, wherein the robot controller further comprises a first synchronization unit configured to periodically synchronize the content of the first memory with the content of the second memory via network communication, and
wherein the computation module further comprises a second synchronization unit configured to periodically synchronize the content of the second memory with the content of the first memory via the network communication.

3. The control system according to claim 1 or 2, wherein the computation module further comprises a memory manager configured to execute at least one of writing and reading of data to and from the second memory based on a request from an application.

4. The control system according to claim 3, wherein the computation module further comprises an application storage unit configured to store one or more applications, and
wherein the memory manager is configured to notify the content of the second memory associated with an application stored in the application storage unit to the associated application.

5. The control system according to claim 3, wherein the memory manager comprises an API corresponding to control of the robot, the memory manager being configured to, when a request from an application is received via the API, write data corresponding to the request in the second memory.

6. The control system according to claim 3, wherein the robot controller further comprises a state collection unit configured to write at least the state information of the robot in the first memory, and
wherein the memory manager is configured to, in response to a request from an application, acquire the state information from the second memory and to pass the state information to the application.

7. The control system according to claim 6, wherein the state collection unit is configured to write the state information in a first write area of the first memory, and
wherein the memory manager is configured to:
acquire the state information from a first read area of the second memory corresponding to the first write area, and pass the state information to the application; and
write data based on a request from the application in a second write area different from the first read area in the second memory.

8. The control system according to claim 7, wherein the robot controller further comprises a memory interpreter configured to generate a control command executable inside the robot controller based on the data read from the first memory.

9. The control system according to claim 8, wherein the robot controller further comprises:
a command storage unit capable of storing a plurality of local commands;
a local interpreter configured to sequentially read the plurality of local commands from the command storage unit and to generate the control command; and
a motion control unit configured to control a motion of the robot based on the control command generated by at least one of the memory interpreter and the local interpreter.

10. The control system according to claim 9, wherein the robot controller further comprises a command selection unit configured to prohibit input of the control command from the memory interpreter to the motion control unit while the robot is operating based on the control command generated by the local interpreter, and to prohibit input of the control command from the local interpreter to the motion control unit while the robot is operating based on the control command generated by the memory interpreter.

11. The control system according to claim 9, wherein an application is configured to generate data to be used in control based on a local command and to request the memory manager to write generated data, and
wherein the motion control unit is configured to control the motion of the robot based on the generated data read from the first memory and the local command read from the command storage unit.

12. The control system according to claim 9, wherein the robot controller comprises:
a local control mode in which the motion control unit controls the motion of the robot based on the control command generated by the local interpreter; and
an application control mode in which the motion control unit controls the motion of the robot based on the control command generated by the memory interpreter based on a computation result by an application.

13. The control system according to claim 12, wherein the robot controller further comprises a response generation unit configured to generate a response corresponding to the data read by the memory interpreter and write the response in the first memory, and
wherein the memory manager is configured to read the response from the second memory and to pass the response to the application that has made a request of writing read data.

14. The control system according to claim 12, wherein the memory manager is configured to queue a plurality of requests from one or more applications in a request storage unit, to sequentially dequeue the plurality of requests from the request storage unit, and to write data corresponding to the dequeued request in the second memory.

15. The control system according to claim 14, wherein the memory manager is configured to, when reading a response from the second memory, dequeue, from the request storage unit, a request subsequent to a request corresponding to the response.

16. The control system according to claim 14, wherein the memory manager is configured to, when the request is a request for reading the state information of the robot, read the state information from the second memory without queuing the request, and to pass the state information to the application that has made the request.

17. A computation module, comprising:
a shared memory configured to store information referred to by a robot controller that controls a robot;
a processor capable of executing an application that performs a computation related to control of the robot based on a content of the shared memory; and
a memory manager configured to execute at least one of writing and reading of data to and from the shared memory based on a request from an application.

18. A computation module, comprising:
a shared memory configured to store information written by a robot controller configured to control a robot;
an application storage unit configured to store one or more applications that perform a computation based on a content of a memory; and
a memory manager configured to notify a content of the shared memory associated with an application stored in the application storage unit to the associated application.

19. A robot controller, comprising:
a shared memory configured to store information written by a computation module capable of executing an application that performs a computation related to control of a robot based on state information of the robot;
a state collection unit configured to write at least the state information in the shared memory;
a memory interpreter configured to generate a control command executable inside the robot controller based on data written in the shared memory based on a computation result by an application; and
a motion control unit configured to control a motion of the robot based on the control command.

20. A control system, comprising:
a processor capable of executing an application that performs a computation related to control of a robot;
a memory manager configured to execute at least one of writing and reading of data to and from a shared memory based on a request from an application;
a command storage unit capable of storing a plurality of local commands;
a local interpreter configured to sequentially read the plurality of local commands from the command storage unit and to generate a control command;
a memory interpreter configured to generate the control command based on data read from the shared memory; and
a motion control unit configured to control a motion of the robot based on the control command generated by at least one of the memory interpreter and the local interpreter.

21. A control system, comprising:
a command storage unit capable of storing a plurality of local commands for controlling a robot;
a computation module configured to generate data used in control based on a local command and to write generated data in a shared memory; and
a motion control unit configured to control a motion of the robot based on the generated data read from the shared memory and the local command read from the command storage unit.

22. A control method, comprising:
storing, by a robot controller configured to control a robot, state information of the robot in a first memory;
synchronizing, by a computation module configured to communicate with the robot controller, a content of a second memory to a content of the first memory; and
executing, by the computation module, an application that performs a computation related to control of the robot based on the content of the second memory.
